# EUROPEAN PATENT SPECIFICATION

(11) **EP 3 851 357 B1**
(45) Date of publication and mention of the grant of the patent: **07.06.2023**
(21) Application number: 19820064.4
(22) Date of filing: 26.06.2019
(51) Int. Cl.: B61H 11/10, B60T 13/66, B60T 17/22

(54) **LOCOMOTIVE BRAKING CONTROL SYSTEM AND CONTROL METHOD**
BREMSSTEUERSYSTEM FÜR LOKOMOTIVE UND STEUERUNGSVERFAHREN
SYSTÈME ET PROCÉDÉ DE COMMANDE DE FREINAGE DE LOCOMOTIVE

(30) Priority: 01.03.2019 CN 201910156513
(43) Date of publication of application: 21.07.2021
(73) Proprietor: CRRC QINGDAO SIFANG ROLLING STOCK RESEARCH INSTITUTE CO., LTD., Shibei District Qingdao Shandong 266000 (CN); QINGDAO SRI TECHNOLOGY CO., LTD., Qingdao, Shandong 266000 (CN)
(72) Inventor: LV, Xiao, Qingdao Shandong 266000 (CN); REN, Xiangjie, Qingdao Shandong 266000 (CN); ZHANG, Zhiqiang, Qingdao Shandong 266000 (CN); ZHU, Guanwen, Qingdao Shandong 266000 (CN); SUN, Bin, Qingdao Shandong 266000 (CN); GE, Rubo, Qingdao Shandong 266000 (CN)
(74) Representative: J A Kemp LLP
(86) International application number: PCT/CN2019/092874
(87) International publication number: WO 2019/238138

(56) References cited:
- EP-A2- 0 829 404
- WO-A1-2013/134918
- CN-A- 104 108 403
- CN-A- 104 228 804
- CN-A- 104 309 598
- CN-A- 104 442 903
- KR-A- 20130 129 691

## Description

### TECHNICAL FIELD

The present invention relates to a locomotive braking control system and control method, belonging to the field of locomotive braking control.

### BACKGROUND

One of the important functions of a locomotive braking control system is to control the brake cylinder equalizing pipe pressure and the brake cylinder pressure; conventionally, a pre-control pressure is controlled by a high-frequency magnet valve, and then the brake cylinder equalizing pipe pressure or brake cylinder pressure, which is consistent with the pre-control pressure, is output by a relay valve.

CN104442903A discloses a brake cylinder equalizing pipe control method and device of a locomotive brake. The device includes: an air source filtration device; a first magnet valve, a pressure amplification valve and a third magnet valve connected with the air source filtration device and disposed on an air line mounting plate; a second magnet valve connected with the first magnet valve and disposed on the air line mounting plate; a control unit and a pressure detection device connected with the first magnet valve and the second magnet valve; a control reservoir connected with the pressure amplification valve and the pressure detection device; and a pneumatic reversing valve connected with the pressure amplification valve and the third magnet valve, wherein an air outlet of the pneumatic reversing valve is connected with an output port of the brake cylinder equalizing pipe.

A further locomotive braking control system is described in EP 0 829 404 A2.

### SUMMARY

A first embodiment of the present invention provides a locomotive braking control system, comprising a brake cylinder equalizing pipe control system and a brake cylinder control system, wherein,

The brake cylinder equalizing pipe control system includes:
a first main reservoir;
a first magnet valve and a first flow amplification valve both connected with the first main reservoir;
a second magnet valve connected with the first magnet valve;
a first pressure selection device connected with the second magnet valve, and a first pressure detection device located between the second magnet valve and the first pressure selection device;
wherein, the first pressure selection device is connected with the first flow amplification valve; and
the brake cylinder equalizing pipe control system further includes a first control unit electrically connected with the first magnet valve, the second magnet valve and the first pressure detection device.

The brake cylinder control system includes:
a second main reservoir;
a third magnet valve and a second flow amplification valve both connected with the second main reservoir;
a fourth magnet valve connected with the third magnet valve;
a second pressure selection device connected with the fourth magnet valve, and a second pressure detection device located between the fourth magnet valve and the second pressure selection device;
wherein, the second pressure selection device is connected with the second flow amplification valve;
the second flow amplification valve is connected with a brake cylinder pipe so as to realize brake; and
the brake cylinder control system further includes a second control unit electrically connected with the third magnet valve, the fourth magnet valve and the second pressure detection device.

Between the brake cylinder equalizing pipe control system and the brake cylinder control system:
the first pressure selection device is connected to a pipeline located between the fourth magnet valve and the second pressure selection device; and
the first flow amplification valve is connected to the second pressure selection device.

Furtherly,
the first pressure detection device is configured to acquire a pre-control pressure of the brake cylinder equalizing pipe control system in real time and transmit the acquired pre-control pressure to the first control unit, thus obtain a pre-control pressure actual value of the brake cylinder equalizing pipe.

The first control unit is configured to, when the locomotive braking control system is in a lead cut in mode, receive instruction information output by a brake handle operated by a driver and calculate a pre-control pressure target value of the brake cylinder equalizing pipe according to the instruction information; or, the first control unit receives a first target value from an integrated control unit, and the integrated control unit is configured to, when the locomotive braking control system is in the lead cut in mode, receive the instruction information output by the brake handle operated by the driver and calculate a first target value according to the instruction information, wherein the first target value and the pre-control pressure target value of the brake cylinder equalizing pipe are equal, and are collectively referred to as a target value.

The first control unit is further configured to compare the target value with the actual value acquired by the first pressure detection device, and control the first magnet valve and/or the second magnet valve according to a difference of the target value and the actual value so that the actual value is equal to the target value, thus obtain the pre-control pressure of the brake cylinder equalizing pipe; and transmit the pre-control pressure of the brake cylinder equalizing pipe to the first pressure selection device.

The first magnet valve is a pre-control air-charging magnet valve, and is configured to open or close an air-charging passage from the first main reservoir to a pre-control volume of the brake cylinder equalizing pipe control system according to the difference of the pre-control pressure target value of the brake cylinder equalizing pipe and the pre-control pressure actual value of the brake cylinder equalizing pipe.

The second magnet valve is a pre-control air-discharging magnet valve, and is configured to open or close an air-discharging passage from the pre-control volume of the brake cylinder equalizing pipe control system to the atmosphere according to the difference of the pre-control pressure target value of the brake cylinder equalizing pipe and the pre-control pressure actual value of the brake cylinder equalizing pipe.

The first pressure selection device is configured to compare the pre-control pressure of the brake cylinder equalizing pipe with a pre-control pressure of a brake cylinder, and output a higher pressure, referred to as a first pressure, among the pre-control pressure of the brake cylinder equalizing pipe and the pre-control pressure of the brake cylinder to the first flow amplification valve; and the pre-control pressure of the brake cylinder is from the brake cylinder control system.

The first flow amplification valve is configured to amplify the first pressure with low-flow to a brake cylinder equalizing pipe pressure with high-flow.

The second pressure detection device is configured to acquire a pre-control pressure of the brake cylinder control system in real time and transmit the acquired pre-control pressure to the second control unit, thus obtain a pre-control pressure actual value of the brake cylinder.

The second control unit is configured to, when the locomotive braking control system is in the lead cut in mode, receive the instruction information output by the brake handle operated by the driver and calculate a pre-control pressure target value of the brake cylinder according to the instruction information, wherein the pre-control pressure target value of the brake cylinder is equal to the pre-control pressure target value of the brake cylinder equalizing pipe; or, when the locomotive braking control system is in the lead cut in mode, the second control unit receives the first target value from the integrated control unit.

The second control unit is further configured to compare the target value with the actual value acquired by the second pressure detection device, and control the third magnet valve and/or the fourth magnet valve according to a difference of the target value and the actual value so that the actual value is equal to the target value, thus obtain the pre-control pressure of the brake cylinder; and transmit the pre-control pressure of the brake cylinder to the second pressure selection device and the first pressure selection device.

The third magnet valve is a pre-control air-charging magnet valve, and is configured to open or close an air-charging passage from the second main reservoir to a pre-control volume of the brake cylinder control system according to the difference of the pre-control pressure target value of the brake cylinder and the pre-control pressure actual value of the of the brake cylinder.

The fourth magnet valve is a pre-control air-discharging magnet valve, and is configured to open or close an air-discharging passage from the pre-control volume of the brake cylinder control system to the atmosphere according to the difference of the pre-control pressure target value of the brake cylinder and the pre-control pressure actual value of the brake cylinder.

The second pressure selection device is configured to compare the brake cylinder equalizing pipe pressure with the pre-control pressure of the brake cylinder, and output a higher pressure, referred to as a second pressure, among the brake cylinder equalizing pipe pressure and the pre-control pressure of the brake cylinder to the second flow amplification valve; and the brake cylinder equalizing pipe pressure is from the brake cylinder equalizing pipe control system.

The second flow amplification valve is configured to amplify the second pressure with low-flow to a brake cylinder pressure with high-flow, and transmit the brake cylinder pressure to the brake cylinder pipe, to realize brake.

A second embodiment of the present application provides a locomotive braking control method, in which the above-mentioned control system can be adopted, including the following steps:
acquiring, by the first pressure detection device, a pre-control pressure of the brake cylinder equalizing pipe control system in real time, and transmitting the acquired pre-control pressure to the first control unit, thus obtaining a pre-control pressure actual value of the brake cylinder equalizing pipe;
when the locomotive braking control system is in a lead cut in mode, receiving, by the first control unit, instruction information output by a brake handle operated by a driver, and calculating a pre-control pressure target value of the brake cylinder equalizing pipe according to the instruction information; or, when the locomotive braking control system is in the lead cut in mode, receiving, by an integrated control unit, the instruction information output by the brake handle operated by the driver, and calculating a first target value according to the instruction information, and receiving, by the first control unit, the first target value from the integrated control unit, wherein the first target value and the pre-control pressure target value of the brake cylinder equalizing pipe are equal and are collectively referred to as a target value;
comparing, by the first control unit, the target value with the actual value, and controlling the first magnet valve and/or the second magnet valve according to a difference of the target value and the actual value so that the actual value is equal to the target value, thus obtaining the pre-control pressure of the brake cylinder equalizing pipe; and transmitting the pre-control pressure of the brake cylinder equalizing pipe to the first pressure selection device;
acquiring, by the second pressure detection device, a pre-control pressure of the brake cylinder control system in real time, and transmitting the acquired pre-control pressure to the second control unit, thus obtaining a pre-control pressure actual value of the brake cylinder;
when the locomotive braking control system is in the lead cut in mode, receiving, by the second control unit, instruction information output by the brake handle operated by the driver, and calculating a pre-control pressure target value of the brake cylinder according to the instruction information, wherein the pre-control pressure target value of the brake cylinder is equal to the pre-control pressure target value of the brake cylinder equalizing pipe; or, when the locomotive braking control system is in the lead cut in mode, receiving, by the second control unit, the first target value from the integrated control unit;
comparing, by the second control unit, the target value with the actual value, and controlling the third magnet valve and/or the fourth magnet valve according to a difference of the target value and the actual value so that the actual value is equal to the target value, thus obtaining the pre-control pressure of the brake cylinder; and transmitting the pre-control pressure of the brake cylinder to the second pressure selection device and the first pressure selection device;
comparing, by the first pressure selection device, the pre-control pressure of the brake cylinder equalizing pipe with the pre-control pressure of the brake cylinder, and outputting a higher pressure, referred to as a first pressure, among the pre-control pressure of the brake cylinder equalizing pipe and the pre-control pressure of the brake cylinder to the first flow amplification valve;
amplifying, by the first flow amplification valve, the first pressure with low-flow to a brake cylinder equalizing pipe pressure with high-flow, and outputting the brake cylinder equalizing pipe pressure to the second pressure selection device;
comparing, by the second pressure selection device, the brake cylinder equalizing pipe pressure with the pre-control pressure of the brake cylinder, and outputting a higher pressure, referred to as a second pressure, among the brake cylinder equalizing pipe pressure and the pre-control pressure of the brake cylinder to the second flow amplification valve; and
amplifying, by the second flow amplification valve, the second pressure with low-flow to a brake cylinder pressure with high-flow, and transmitting the brake cylinder pressure to the brake cylinder pipe so as to realize brake.

A third embodiment of the present application provides a locomotive braking control method by which redundancy switching between the brake cylinder equalizing pipe control system and the brake cylinder control system can be realized:
when the pre-control pressure of the brake cylinder equalizing pipe is invalid, the first magnet valve 101 and the second magnet valve 102 are de-energized, the pre-control pressure of the brake cylinder equalizing pipe is gradually reduced to zero, and the first pressure selection device 104 selects the higher pre-control pressure of the brake cylinder as the first pressure to be output to the first flow amplification valve 106, and then the brake cylinder equalizing pipe pressure is output; or
when the pre-control pressure of the brake cylinder is invalid, the third magnet valve 201 and the fourth magnet valve 202 are de-energized, the pre-control pressure of the brake cylinder is gradually reduced to zero, and the second pressure selection device 204 selects the higher brake cylinder equalizing pipe pressure as the second pressure to be output to the second flow amplification valve 206, and then the brake cylinder pressure is output.

Compared with the prior art, the present application has the following beneficial effects:
(1) the mutual cooperation of the brake cylinder equalizing pipe control system and the brake cylinder control system is realized; and
(2) when failure occurs on a pre-control part of the brake cylinder equalizing pipe control system or that of the brake cylinder control system, the pre-control part of the brake cylinder equalizing pipe control system and that of the brake cylinder control system can be mutually redundant, so that the control precision and reliability of the locomotive braking control system can be effectively improved.

### BRIEF DESCRIPTION OF THE DRAWINGS

Fig. 1 is a schematic diagram of a first embodiment of a locomotive braking control system;
Fig. 2 is a schematic diagram of a second embodiment of the locomotive braking control system;
Fig. 3 is a schematic diagram of an example of the locomotive braking control system;
   wherein: 1 brake cylinder equalizing pipe control system, 101 first magnet valve, 102 second magnet valve, 103 first main reservoir, 104 first pressure selection device, 105 first pressure detection device, 106 first flow amplification valve, 107 first pre-control reservoir, 108 cut-off valve, 109 third pressure detection device, 110 first control unit, 111 first pipeline, 112 third pipeline; 2 brake cylinder control system, 201 third magnet valve, 202 fourth magnet valve, 203 second main reservoir, 204 second pressure selection device, 205 second pressure detection device, 206 second flow amplification valve, 207 fifth magnet valve, 208 mechanical distribution valve, 209 sixth magnet valve, 210 second pre-control reservoir, 211 fourth pressure detection device, 212 brake cylinder pipe, 213 second control unit, 214 second pipeline, 215 fourth pipeline; and 3 integrated control unit.

### DETAILED DESCRIPTION OF THE EMBODIMENTS

The technical solutions of the present invention will be described in detail below in combination with specific embodiments. However, it should be understood that elements, structures and features in one embodiment may also be advantageously incorporated into other embodiments without further description.

In the description of the present invention it should be noted that terms such as "first" and "second" are used for descriptive purposes only, and cannot be understood as indicating or implying the relative importance. Unless otherwise specified and defined, the connection may be direct connection or indirect connection through an intermediate medium, and may be internal connection of two elements. The embodiments are only described as preferred embodiments of the present application, and are not intended to limit the scope of the present application. Various modifications and improvements made on the technical solutions of the present application by ordinary skill in the art without departing from the design spirit of the present application shall fall within the protective scope confirmed by the claims of the present application.

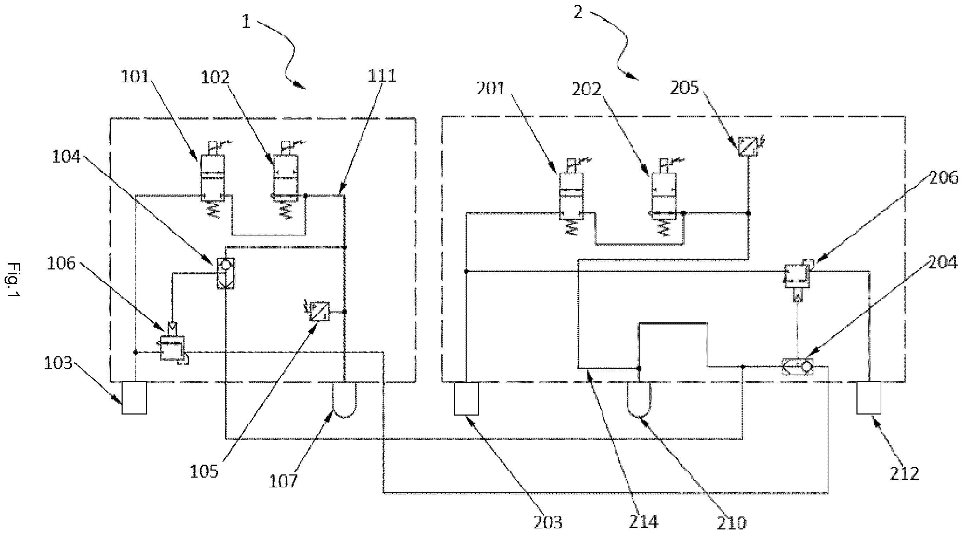

An embodiment of the present invention provides a locomotive braking control system, as shown in Fig. 1, including a brake cylinder equalizing pipe control system 1 and a brake cylinder control system 2.
(1) The brake cylinder equalizing pipe control system 1 includes:
   a first main reservoir 103; a first magnet valve 101 and a first flow amplification valve 106 both connected with the first main reservoir 103; a second magnet valve 102 connected with the first magnet valve 101; a first pressure selection device 104 connected with the second magnet valve 102 and a first pressure detection device 105 located therebetween; and the first pressure selection device 104 is connected with the first flow amplification valve 106. The brake cylinder equalizing pipe control system 1 further includes a first control unit 110 electrically connected with the first magnet valve 101, the second magnet valve 102 and the first pressure detection device 105.
(2) The brake cylinder control system 2 includes:
   a second main reservoir 203; a third magnet valve 201 and a second flow amplification valve 206 both connected with the second main reservoir 203;
   a fourth magnet valve 202 connected with the third magnet valve 201; a second pressure selection device 204 connected with the fourth magnet valve 202 and a second pressure detection device 205 located therebetween; the second pressure selection device 204 is connected with the second flow amplification valve 206, and the second flow amplification valve 206 is connected with a brake cylinder pipe 212, so as to realize brake. The brake cylinder control system 2 further includes a second control unit 213 electrically connected with the third magnet valve 201, the fourth magnet valve 202 and the second pressure detection device 205.
(3) Between the brake cylinder equalizing pipe control system 1 and the brake cylinder control system 2:
   the first pressure selection device 104 is connected to a second pipeline 214 located between the fourth magnet valve 202 and the second pressure selection device 204; and the first flow amplification valve 106 is connected to the second pressure selection device 204.

Further,
the first pressure detection device 105 is configured to acquire a pre-control pressure of the brake cylinder equalizing pipe control system 1 in real time and transmit the acquired pre-control pressure to the first control unit 110 to obtain a pre-control pressure actual value of the brake cylinder equalizing pipe.

The first control unit 110 is configured to, when the locomotive braking control system is in a lead cut in mode, receive instruction information output by a brake handle operated by a driver and calculate a pre-control pressure target value of the brake cylinder equalizing pipe according to the instruction information; or, the first control unit 110 receives a first target value from the integrated control unit, and the integrated control unit is configured to, when the locomotive braking control system is in the lead cut in mode, receive instruction information output by the brake handle operated by the driver and calculate the first target value according to the instruction information, wherein the first target value and the pre-control pressure target value of the brake cylinder equalizing pipe are equal.

The first control unit 110 is further configured to compare the target value with the actual value (that is, the pre-control pressure actual value of the brake cylinder equalizing pipe) acquired by the first pressure detection device 105, and control the first magnet valve 101 and/or the second magnet valve 102 according to a difference of the target value and the actual value so that the actual value is equal to the target value, thus obtain the pre-control pressure of the brake cylinder equalizing pipe; and transmit the pre-control pressure of the brake cylinder equalizing pipe to the first pressure selection device 104.

The first magnet valve 101 is a pre-control air-charging magnet valve, and is configured to open or close an air-charging passage from the first main reservoir 103 to a pre-control volume of the brake cylinder equalizing pipe control system 1 according to the difference of the pre-control pressure target value of the brake cylinder equalizing pipe and the pre-control pressure actual value of the brake cylinder equalizing pipe.

Seen from Fig. 1, the pre-control volume can refer to a volume of a first pipeline 111 located between the second magnet valve 102 and the first pressure selection device 104; and a pressure of the volume of the pipeline is the pre-control pressure of the brake cylinder equalizing pipe.

The second magnet valve 102 is a pre-control air-discharging magnet valve, and is configured to open or close an air-discharging passage from the pre-control volume of the brake cylinder equalizing pipe control system 1 to the atmosphere according to the difference of the pre-control pressure target value of the brake cylinder equalizing pipe and the pre-control pressure actual value of the brake cylinder equalizing pipe.

The first pressure selection device 104 is configured to compare the pre-control pressure of the brake cylinder equalizing pipe with a pre-control pressure of a brake cylinder, and output a higher pressure thereof, referred to as a first pressure, to the first flow amplification valve 106; and the pre-control pressure of the brake cylinder is from the brake cylinder control system 2.

The first flow amplification valve 106 is configured to amplify the first pressure with low-flow of the brake cylinder equalizing pipe control system 1 to a brake cylinder equalizing pipe pressure with high-flow.

The second pressure detection device 205 is configured to acquire a pre-control pressure of the brake cylinder control system 2 in real time and transmit the acquired pre-control pressure to the second control unit 213 to obtain a pre-control pressure actual value of the brake cylinder.

The second control unit 213 is configured to, when the locomotive braking control system is in the lead cut in mode, receive the instruction information output by the brake handle operated by the driver and calculate a pre-control pressure target value of the brake cylinder according to the instruction information, wherein the pre-control pressure target value of the brake cylinder is equal to the pre-control pressure target value of the brake cylinder equalizing pipe; or, when the locomotive braking control system is in the lead cut in mode, the second control unit 213 receives the first target value from the integrated control unit.

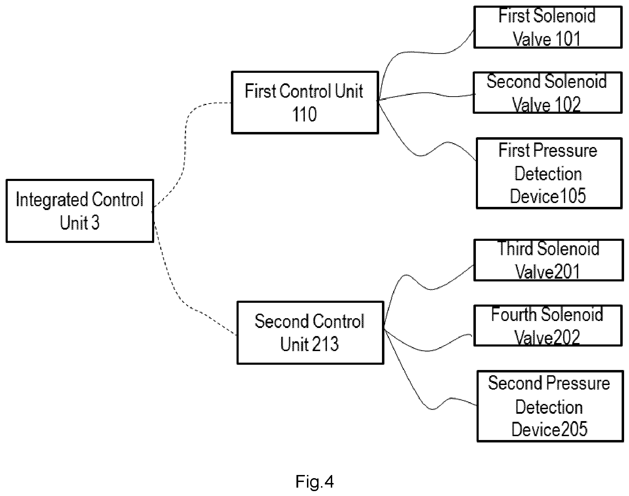

It should be noted that the pre-control pressure target value of the brake cylinder equalizing pipe, the pre-control pressure target value of the brake cylinder and the first target value are equal, thus they are collectively referred to as the target value. Known from the aforementioned description, the target value may be respectively calculated by the first control unit 110 and the second control unit 213, or may be calculated by the integrated control unit and then the obtained target value is distributed to the first control unit 110 and the second control unit 213, as shown in Fig. 4. The integrated control unit 3 in Fig. 4 is connected with the first control unit 110 and the second control unit 213 by dotted lines, which means that the present application may be achieved in a way that the first control unit and the second control unit are controlled by the integrated control unit, or the present application may be achieved without the integrated control unit.

The second control unit 213 is further configured to compare the target value with the actual value (that is, the pre-control pressure actual value of the brake cylinder) acquired by the second pressure detection device 205, and control the third magnet valve 201 and/or the fourth magnet valve 202 according to a difference of the target value and the actual value so that the actual value is equal to the target value, thus obtain the pre-control pressure of the brake cylinder; and transmit the pre-control pressure of the brake cylinder to the second pressure selection device 204 and the first pressure selection device 104.

The third magnet valve 201 is a pre-control air-charging magnet valve, and is configured to open or close an air-charging passage from the second main reservoir 203 to a pre-control volume of the brake cylinder control system 2 according to the difference of the pre-control pressure target value of the brake cylinder and the pre-control pressure actual value of the brake cylinder.

Seen from Fig. 1, the pre-control volume can refer to a volume of the second pipeline 214 located between the fourth magnet valve 202 and the second pressure selection device 204; and a pressure of the volume of the pipeline is the pre-control pressure of the brake cylinder.

The fourth magnet valve 202 is a pre-control air-discharging magnet valve, and is configured to open or close an air-discharging passage from the pre-control volume of the brake cylinder control system 2 to the atmosphere according to the difference of the pre-control pressure target value of the brake cylinder and the pre-control pressure actual value of the brake cylinder.

The second pressure selection device 204 is configured to compare the brake cylinder equalizing pipe pressure with the pre-control pressure of the brake cylinder, and output a higher pressure thereof, referred to as a second pressure, to the second flow amplification valve 206; and the brake cylinder equalizing pipe pressure is from the brake cylinder equalizing pipe control system 1.

The second flow amplification valve 206 is configured to amplify the second pressure with low-flow of the brake cylinder control system 2 to a brake cylinder pressure with high-flow, and transmit the brake cylinder pressure to the brake cylinder pipe 212, to realize brake.

As a preferred embodiment, the pressure detection devices 105, 205 may select from, but are not limited to, pressure sensors.

As a preferred embodiment, the pressure selection devices 104, 204 may select from, but are not limited to, two-way valves, or two-position three-way magnet valves; as a two-position three-way magnet valve is required to be additionally electrically controlled, a two-way valve is preferred.

As a preferred embodiment, the flow amplification valves 106, 206 may select from, but are not limited to, relay valves.

As a preferred embodiment, the first main reservoir 103 and the second main reservoir 203 can be the same main reservoir or different main reservoirs.

As a preferred embodiment, as shown in Fig. 1, the second magnet valve 102 is further connected with a first pre-control reservoir 107 to increase the pre-control volume of the brake cylinder equalizing pipe control system 1. A pre-control pressure of the first pre-control reservoir 107 can be acquired by the first pressure detection device 105 in real time and be transmitted to the first control unit 110 so as to be used as the pre-control pressure actual value of the brake cylinder equalizing pipe; and then, the actual value is compared with the target value, and by controlling the first magnet valve 101 and/or the second magnet valve 102, the pre-control pressure actual value of the brake cylinder equalizing pipe and the target value are equal. The first pre-control reservoir 107 is capable of increasing the pre-control volume of the brake cylinder equalizing pipe, and besides the first pipeline 111 can be used as the pre-control volume, the pre-control reservoir can also be used as a part of the pre-control volume, and thus, it is convenient to realize pressure control.

As a preferred embodiment, as shown in Fig. 1, the fourth magnet valve 202 is further connected with a second pre-control reservoir 210 to increase the pre-control volume of the brake cylinder control system 2; and the working principle of the second pre-control reservoir 210 is the same as that of the first pre-control reservoir, the descriptions thereof are omitted herein. Meanwhile, it can be further known that the second pre-control reservoir 210 is located at the front ends of the first pressure selection device 104 and the second pressure selection device 204. The front end or rear end in the present application is mainly described with respect to the flow direction of the air pressure.

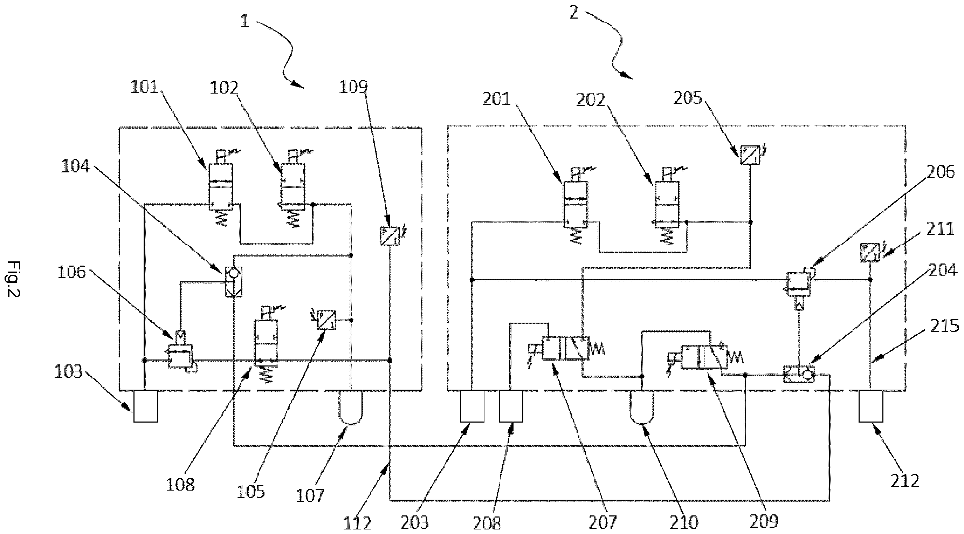

As a preferred embodiment, as shown in Fig. 2, the first control unit 110 can be further electrically connected with a cut-off valve 108. The cut-off valve 108 is located in the brake cylinder equalizing pipe control system 1, is preferably located behind the first flow amplification valve 106 and is used for opening or closing a brake cylinder equalizing pipe pressure output pipeline of the brake cylinder equalizing pipe control system 1.

When the locomotive braking control system is in the lead cut in mode, the first control unit 110 controls the cut-off valve 108 to be de-energized, and the brake cylinder equalizing pipe pressure output pipeline is in a connected state; and when the locomotive braking control system is in a trail mode, the first control unit 110 controls the cut-off valve 108 to be energized, the brake cylinder equalizing pipe pressure output pipeline is in a closed state, and thus, an air pressure from an external interface (unshown in the figures) can be prevented from further entering the brake cylinder equalizing pipe control system 1.

As a preferred embodiment, as shown in Fig. 2, in the brake cylinder control system 2, the second control unit 213 is further electrically connected with a fifth magnet valve 207 which is a distribution valve switching magnet valve. The fifth magnet valve 207 is connected with the fourth magnet valve on one hand, is connected with a mechanical distribution valve 208 on the other hand, and is connected with the second pressure selection device 204 on another hand; and the fifth magnet valve 207 is used for switching and selecting a source of the pre-control pressure of the brake cylinder.

Specifically, when the fifth magnet valve 207 is energized, the pre-control pressure of the brake cylinder is from the pre-control pressure generated by the third magnet valve 201 and the fourth magnet valve 202; and when the fifth magnet valve 207 is de-energized, the pre-control pressure of the brake cylinder is from the mechanical distribution valve 208 which is externally connected. When the locomotive braking control system is in the lead cut in mode and the pre-control pressure generated by the third magnet valve 201 and the fourth magnet valve 202 is not abnormal, the fifth magnet valve 207 is in an energized state.

As a preferred embodiment, in the brake cylinder control system 2, the second control unit 213 can be further electrically connected with a sixth magnet valve 209 which is a bail-off magnet valve. On one hand, the sixth magnet valve 209 is connected with the fourth magnet valve or is preferably connected with the fifth magnet valve 207 when there is the fifth magnet valve 207; and on the other hand, the sixth magnet valve 209 is connected with the second pressure selection device 204, and the sixth magnet valve 209 is further connected to the atmosphere. The sixth magnet valve 209 can be used for emptying the pre-control pressure of the brake cylinder at the rear end of the sixth magnet valve 209 when the locomotive braking control system is independently relieved.

As a preferred embodiment, in the brake cylinder equalizing pipe control system 1, a third pipeline 112 from the first flow amplification valve 106 to the second pressure selection device 204 is provided with a third pressure detection device 109, preferably to be a pressure sensor, for acquiring a brake cylinder equalizing pipe pressure value. The third pressure detection device 109 can be used for displaying and monitoring the brake cylinder equalizing pipe pressure in real time; and providing assistant judgment whether failure occurs on the first flow amplification valve 106 according to a difference of the first pressure and the actual brake cylinder equalizing pipe pressure.

As a preferred embodiment, in the brake cylinder control system 2, a fourth pipeline 215 from the second flow amplification valve 206 to the brake cylinder pipe 212 is provided with a fourth pressure detection device 211, preferably to be a pressure sensor, for acquiring a brake cylinder pressure value. The fourth pressure detection device 211 can be used for displaying and monitoring the brake cylinder pressure in real time; and providing assistant judgment whether failure occurs on the second flow amplification valve 206 according to a difference of the second pressure and the actual brake cylinder pressure.

As a preferred embodiment, a pressure at an outlet of the first flow amplification valve 106 is not greater than the first pressure from the first pressure selection device 104, to prevent the pressure instability caused by air connection of the second pressure selection device 204 when the pre-control pressure of the brake cylinder is close to the brake cylinder equalizing pipe pressure.

A second embodiment of the present invention provides a locomotive braking control method which can be realized by the aforementioned locomotive braking control system. The locomotive braking control method includes the following steps.
(1) The first pressure detection device 105 acquires a pre-control pressure of the brake cylinder equalizing pipe control system 1 in real time and transmits the acquired pre-control pressure to the first control unit to obtain a pre-control pressure actual value of the brake cylinder equalizing pipe.

When the locomotive braking control system is in a lead cut in mode, the first control unit 110 receives instruction information output by a brake handle operated by a driver and calculates a pre-control pressure target value of the brake cylinder equalizing pipe according to the instruction information; or, the first control unit 110 receives a first target value from the integrated control unit 3, and when the locomotive braking control system is in the lead cut in mode, the integrated control unit 3 receives the instruction information output by the brake handle operated by the driver and calculates the first target value according to the instruction information, wherein the first target value and the pre-control pressure target value of the brake cylinder equalizing pipe are equal and are collectively referred to as a target value.

The first control unit 110 compares the target value with the actual value, and controls the first magnet valve 101 and/or the second magnet valve 102 according to a difference of the target value and the actual value so that the actual value is equal to the target value, thus obtain the pre-control pressure of the brake cylinder equalizing pipe; and transmits the pre-control pressure of the brake cylinder equalizing pipe to the first pressure selection device 104.

(2) The second pressure detection device 205 acquires a pre-control pressure of the brake cylinder control system 2 in real time and transmits the acquired pre-control pressure to the second control unit 213 to obtain a pre-control pressure actual value of the brake cylinder.

When the locomotive braking control system is in a lead cut in mode, the second control unit 213 receives the instruction information output by the brake handle operated by the driver and calculates a pre-control pressure target value of the brake cylinder according to the instruction information, wherein the pre-control pressure target value of the brake cylinder is equal to the pre-control pressure target value of the brake cylinder equalizing pipe; or, when the locomotive braking control system is in a lead cut in mode, the second control unit receives the first target value from the integrated control unit 3.

The second control unit compares the target value with the actual value, and controls the third magnet valve 201 and/or the fourth magnet valve 202 according to a difference of the target value and the actual value so that the actual value is equal to the target value, thus obtain the pre-control pressure of the brake cylinder; and transmits the pre-control pressure of the brake cylinder to the second pressure selection device 204 and the first pressure selection device 104.

(3) The first pressure selection device 104 compares the pre-control pressure of the brake cylinder equalizing pipe with the pre-control pressure of the brake cylinder, and outputs a higher pressure (referred to as a first pressure) among the pre-control pressure of the brake cylinder equalizing pipe and the pre-control pressure of the brake cylinder to the first flow amplification valve 106; and the first flow amplification valve 106 amplifies the first pressure with low-flow to a brake cylinder equalizing pipe pressure with high-flow, and then outputs the brake cylinder equalizing pipe pressure to the second pressure selection device 204.

(4) The second pressure selection device 204 compares the brake cylinder equalizing pipe pressure with the pre-control pressure of the brake cylinder, and outputs a higher pressure (referred to as a second pressure) among the brake cylinder equalizing pipe pressure and the pre-control pressure of the brake cylinder to the second flow amplification valve 206; and the second flow amplification valve 206 amplifies the second pressure with low-flow to a brake cylinder pressure with high-flow, and then outputs the brake cylinder pressure to the brake cylinder pipe 212 so as to realize brake.

The locomotive braking control method can be achieved by adopting the aforementioned locomotive braking control system, and therefore, the embodiments in the locomotive braking control system can also be effectively applied to the present method, include, but are not limited to the followings.

As a preferred embodiment, the pressure detection devices 105, 205 select from, but are not limited to, pressure sensors; the pressure selection devices 104, 204 can select from, but are not limited to, two-way valves or two-position three-way magnet valves; and the flow amplification valves 106, 206 can select from, but are not limited to, relay valves.

As a preferred embodiment, the second magnet valve 102 is further connected with a first pre-control reservoir 107 for increasing the pre-control volume of the brake cylinder equalizing pipe control system 1. The first pressure detection device 105 acquires a pre-control pressure of the first pre-control reservoir 107 in real time as the pre-control pressure actual value of the brake cylinder equalizing pipe, and sends to the first control unit 110. The fourth magnet valve 202 is further connected with a second pre-control reservoir 210 for increasing the pre-control volume of the brake cylinder control system 2. The second pressure detection device 205 can acquire the pre-control pressure of the second pre-control reservoir 210 in real time as the pre-control pressure actual value of the brake cylinder, and send to the second control unit 213.

As a preferred embodiment, the first control unit 110 is further electrically connected with a cut-off valve 108, and the cut-off valve 108 is located behind the first flow amplification valve 106. When the locomotive braking control system is in the lead cut in mode, the first control unit 110 controls the cut-off valve 108 to be de-energized, and the brake cylinder equalizing pipe pressure output pipeline is in a connected state.

As a preferred embodiment, the second control unit 213 is further electrically connected with a fifth magnet valve 207 which is a distribution valve switching magnet valve. When the fifth magnet valve 207 is energized, the pre-control pressure of the brake cylinder is from the pre-control pressure generated by the third magnet valve 201 and the fourth magnet valve 202; and when the fifth magnet valve 207 is de-energized, the pre-control pressure of the brake cylinder is from the mechanical distribution valve 208 which is externally connected. When the locomotive braking control system is in the lead cut in mode and the pre-control pressure generated by the third magnet valve 201 and the fourth magnet valve 202 is not abnormal, the fifth magnet valve 207 is in an energized state.

By using the locomotive braking control method provided by the present application, the redundancy switching between the brake cylinder equalizing pipe control system 1 and the brake cylinder control system 2 can be further realized:
when the pre-control pressure of the brake cylinder equalizing pipe is invalid, the first magnet valve 101 and the second magnet valve 102 are de-energized, the pre-control pressure of the brake cylinder equalizing pipe is gradually reduced to zero, and the first pressure selection device 104 selects the higher pre-control pressure of the brake cylinder as the first pressure to be output to the first flow amplification valve 106, and then the brake cylinder equalizing pipe pressure is output; or
when the pre-control pressure of the brake cylinder is invalid, the third magnet valve 201 and the fourth magnet valve 202 are de-energized, the pre-control pressure of the brake cylinder is gradually reduced to zero, and the second pressure selection device 204 selects the higher brake cylinder equalizing pipe pressure as the second pressure to be output to the second flow amplification valve 206, and then the brake cylinder pressure is output.

Or, more specifically,
(1) when failure occurs on the brake cylinder equalizing pipe control system 1:
   the first control unit 110 acquires the pre-control pressure of the brake cylinder equalizing pipe in real time by the first pressure detection device 105, to obtain the pre-control pressure actual value of the brake cylinder equalizing pipe;
   when the locomotive braking control system is in the lead cut in mode, the first control unit 110 compares the actual value with the target value, and controls the first magnet valve 101 and the second magnet valve 102 according to a comparison result;
   if the actual value cannot be consistent with the target value within a preset time range, the first control unit 110 determines that failure occurs on the first magnet valve 101 or on the second magnet valve 102 or on the first pressure detection device 105, thus the three elements are de-energized, and the pre-control pressure of the brake cylinder equalizing pipe is discharged into the atmosphere by the second magnet valve 102; and
   the pre-control pressure of the brake cylinder from the brake cylinder control system 2 is selected by the first pressure selection device 104 as a higher output, and is output to the first flow amplification valve 106, and then the brake cylinder equalizing pipe pressure is output.
   Or,
(2) when failure occurs on the brake cylinder control system 2:
   the second control unit 213 acquires the pre-control pressure of the brake cylinder in real time by the second pressure detection device 205, to obtain the pre-control pressure actual value of the brake cylinder;
   when the locomotive braking control system is in the lead cut in mode, the second control unit 213 compares the actual value with the target value, and controls the third magnet valve 201 and the fourth magnet valve 202 according to a comparison result;
   if the actual value cannot be consistent with the target value within a preset time range, the second control unit 213 determines that failure occurs on the third magnet valve 201 or on the fourth magnet valve 202 or on the second pressure detection device 205, thus the three elements are de-energized, and the pre-control pressure of the brake cylinder is discharged into the atmosphere by the fourth magnet valve 202; and
   the brake cylinder equalizing pipe pressure from the brake cylinder equalizing pipe control system 1 is selected by the second pressure selection device 204 as a higher output and is output to the second flow amplification valve 206, and then the brake cylinder pressure is output.

When failure occurs on a pre-control part of the brake cylinder equalizing pipe control system 1 or that of the brake cylinder control system 2, the pre-control part of the brake cylinder equalizing pipe control system and that of the brake cylinder control system can be mutually redundant, so that the control precision and reliability of the system are effectively improved in the case that no air distribution valves or other configurations are added.

It should be noted that, in the present invention, the first main reservoir 103 and the second main reservoir 203 can be the same main reservoir or different main reservoirs as long as functions in the present application can be achieved. The pressure selection device is preferably selected from a device with pressure comparison function, such as a two-way valve, so as not to be required to be additionally controlled by the control unit; of course, a two-position three-way valve can also be selected and controlled by the control unit, or other devices capable of achieving the above-mentioned purpose can also be selected. The flow amplification valve is preferably selected from device with flow amplification function, such as a relay valve, so as not to be required to be additionally controlled by the control unit, or other devices capable of achieving the above-mentioned purpose can also be selected. In the locomotive braking control system, the first control unit 110 and the second control unit 213 can also be further integrated into the integrated control unit 3 as long as the functions of the first control unit 110 and the second control unit 213 in the present invention can be achieved

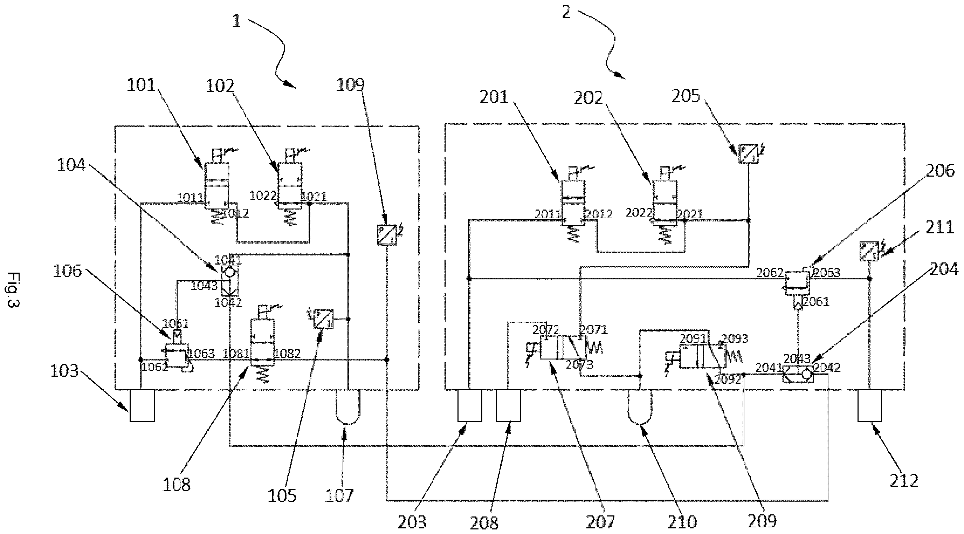

The present invention will be described in detail below with reference to fig.3, fig.4 and embodiments. It should be understood that the present embodiment is only a preferred embodiment of the present invention, and cannot be understood as a limitation on the protective scope of the present invention.

### (1) Brake cylinder equalizing pipe Control System:

The brake cylinder equalizing pipe control system 1 includes a first control unit 110, and the first control unit 110 is electrically connected with a first magnet valve 101, a second magnet valve 102, a cut-off valve 108 and a first pressure detection device 105; the first magnet valve 101 is a pre-control air-charging magnet valve, the second magnet valve 102 is a pre-control air-discharging magnet valve, and the first pressure detection device 105 is a pressure sensor; a first port 1011 of the first magnet valve 101 is connected to a first main reservoir 103, a second port 1012 of the first magnet valve 101 is connected to a first port 1021 of the second magnet valve 102, and a second port 1022 of the second magnet valve 102 is connected to the atmosphere; the first port 1021 of the second magnet valve 102 is further connected with a first port 1041 of a first two-way valve 104, and the first pressure detection device 105 is located between the first port 1021 and the first port 1041; and a second port 1042 of the first two-way valve 104 is connected with a brake cylinder control system 2, a third port 1043 of the first two-way valve 104 is connected with a first port 1061 of a first relay valve 106, a second port 1062 of the first relay valve 106 is connected with the first main reservoir 103, and a third port 1063 of the first relay valve 106 is connected with a first port 1081 of the cut-off valve 108, and a second port of the cut-off valve 108 is connected to the brake cylinder control system 2.

### (2) Brake Cylinder Control System:

The brake cylinder control system 2 includes a second control unit 213, and the second control unit is electrically connected with a third magnet valve 201, a fourth magnet valve 202, a fifth magnet valve 207, a sixth magnet valve 209 and a second pressure detection device 205; the third magnet valve 201 is a pre-control air-charging magnet valve, the fourth magnet valve 202 is a pre-control air-discharging magnet valve, and the second pressure detection device 205 is a pressure sensor; a first port 2011 of the third magnet valve 201 is connected to a second main reservoir 203, a second port 2012 of the third magnet valve 201 is connected to a first port 2021 of the fourth magnet valve 202, and a second port 2022 of the fourth magnet valve 202 is connected to the atmosphere; the first port 2021 of the fourth magnet valve 202 is further connected with a first port 2071 of the fifth magnet valve 207, and the second pressure detection device 205 is located between the first port 2021 and the first port 2071; and a second port 2072 of the fifth magnet valve 207 is connected to a mechanical distribution valve 208, and a third port 2073 of the fifth magnet valve 207 is connected with a first port 2091 of the sixth magnet valve 209 and a second pre-control reservoir 210; the first port 2091 of the sixth magnet valve 209 is also connected with the second pre-control reservoir 210, a second port 2092 of the sixth magnet valve 209 is connected with a first port 2041 of a second two-way valve 204 and the second port 1042 of the first two-way valve 104, and a third port 2093 of the sixth magnet valve 209 is connected to the atmosphere; and a second port 2042 of the second two-way valve 204 is connected with a second port 1802 of the cut-off valve 108, a third port 2043 of the second two-way valve 204 is connected with a first port 2061 of a second relay valve 206, a second port 2062 of the second relay valve 206 is connected with a second main reservoir 203, and a third port 2063 of the second relay valve 206 is connected with a brake cylinder pipe 212, so that brake may be realized.

### (3) Working Description:

When the locomotive braking control system is in the lead cut in mode, the first control unit 110 receives instruction information output by an automatic brake handle and an independent handle operated by the driver, calculates the pre-control pressure target value of the brake cylinder equalizing pipe according to the instruction information, compares the target value with the pre-control pressure actual value of the brake cylinder equalizing pipe which is acquired by the first pressure detection device 105, and controls the first magnet valve 101 and/or the second magnet valve 102 according to the difference of the target value and the actual value so that the actual value is equal to the target value, thus obtain the pre-control pressure of the brake cylinder equalizing pipe. Specifically, when the actual value is greater than the target value, the second magnet valve 102 is controlled to discharge air to the atmosphere through the second port 1022 thereof to reduce the actual value, so that the actual value is equal to the target value; and when the actual value is smaller than the target value, the first magnet valve 101 is controlled to charge air to the first pre-control reservoir 107 through the first main reservoir 103 to increase the actual value, so that the actual value is equal to the target value. Meanwhile, the first control unit controls the cut-off valve 108 to be de-energized, so that the brake cylinder equalizing pipe pressure output pipeline is in the connected state.

Similarly, when the locomotive braking control system is in the lead cut in mode, the second control unit 213 receives the instruction information output by the automatic brake handle and the independent brake handle operated by the driver, calculates the pre-control pressure target value of the brake cylinder according to the instruction information, compares the target value with a pre-control pressure actual value of the brake cylinder which is acquired by the second pressure detection device 205, and controls the third magnet valve 201 and/or the fourth magnet valve 202 according to the difference of the target value and the actual value so that the actual value is equal to the target value, thus obtain the pre-control pressure of the brake cylinder. Specifically, when the actual value is greater than the target value, the fourth magnet valve 202 is controlled to discharge air to the atmosphere through the second port 2022 thereof to reduce the actual value, so that the actual value is equal to the target value; and when the actual value is smaller than the target value, the third magnet valve 201 is controlled to charge air to a second pre-control reservoir 210 through the second main reservoir 203 to increase the actual value, so that the actual value is equal to the target value. Meanwhile, the second control unit controls the fifth magnet valve 207 to be energized, so that the first port 2071 is connected with the third port 2073; the second control unit controls the sixth magnet valve 209 to be de-energized, so that the first port 2091 is connected with the second port 2092, thus the brake cylinder pre-control pressure output pipeline is in the connected state; and therefore, the pre-control pressure of the brake cylinder can arrive at the second port 1042 of the first two-way valve 104 and the first port 2041 of the second two-way valve 204 through the fifth magnet valve 207 and the sixth magnet valve 209.

Or, when the locomotive braking control system is in the lead cut in mode, the integrated control unit 3 is used to receive the instruction information output by the automatic brake handle and the independent brake handle operated by the driver, calculate the pre-control pressure target value of the brake cylinder according to the instruction information, and transmit the target value to the first control unit 110 and the second control unit 213 respectively so as to realize the comparison and control of the target value and the actual value.

The first two-way valve 104 is used to compare the pre-control pressure of the brake cylinder equalizing pipe from the first port 1041 with the pre-control pressure of the brake cylinder from the second port 1042, and output the higher pressure (i.e., the first pressure) among the pre-control pressure of the brake cylinder equalizing pipe and the pre-control pressure of the brake cylinder to the first port 1061 of the first relay valve 106.

The first relay valve 106 is used to amplify the first pressure with low-flow to the brake cylinder equalizing pipe pressure with high-flow, flowing out of the third port 1063 of the first relay valve, and being transmitted to the second port 2042 of the second two-way valve 204 through the cut-off valve 108.

The second two-way valve 204 is used to compare the pre-control pressure of the brake cylinder from the first port 2041 with the brake cylinder equalizing pipe pressure from the second port 2042, and output the higher pressure (i.e., the second pressure) among the pre-control pressure of the brake cylinder and the brake cylinder equalizing pipe pressure to the first port 2061 of the second relay valve 206.

The second relay valve 206 is used to amplify the second pressure with low-flow to the brake cylinder pressure with high-flow, and transmit the brake cylinder pressure to the brake cylinder pipe 212 through the third port 2063 so as to realize brake.

The fifth magnet valve 207 is a distribution valve switching magnet valve and is used for switching and selecting a source of the pre-control pressure of the brake cylinder. Specifically, when the fifth magnet valve 207 is energized, the first port 2071 is connected with the third port 2073, and the pre-control pressure of the brake cylinder is the pre-control pressure from rear ends of the third magnet valve 201 and the fourth magnet valve 202; and when the fifth magnet valve 207 is de-energized, the second port 2072 is connected with the third port 2073, the pre-control pressure of the brake cylinder is from the mechanical distribution valve 208 which is externally connected. When the locomotive braking control system is in the lead cut in mode and the pre-control pressure of the brake cylinder generated by the third magnet valve 201 and/or the fourth magnet valve 202 is not abnormal, the fifth magnet valve 207 is in the energized state.

The sixth magnet valve 209 is a bail-off magnet valve and can be used for emptying the pre-control pressure of the brake cylinder at the rear end of the sixth magnet valve 209 when the locomotive braking control system is independently relieved. When the locomotive braking control system is in the lead cut in mode and in a normal working state, the sixth magnet valve 209 is de-energized, and the first port 2091 is connected with the second port 2092, so that the brake cylinder pre-control pressure output pipeline is in the connected state.

In addition, when an actual pressure difference of the first port 2041 and the second port 2042 of the second two-wavy valve 204 is not greater than the tolerable pressure difference of the second two-wavy valve 204 itself, air connection between the first port 2041 and the second port 2042 can occur. Therefore, when the pre-control pressure of the brake cylinder at the first port 2041 of the second two-way valve is close to the brake cylinder equalizing pipe pressure at the second port 2042, air connection between the two ports occurs; if the pressure P1 at the third port 1063 of the first relay valve is higher than the pressure P2 at the first port 1061, the pressure at the first port 2041 of the second two-way valve = the pressure at the second port 1042 of the first two-way valve = the pressure of the third port 1043 of the first two-way valve = the pressure at the first port 1061 of the first relay valve = P1 > P2, and therefore, the pressure at the first port 1061 of the first relay valve becomes higher and higher.

For example, if under a general condition the pressure at the third port 1063 of the first relay valve is always 5kPa (smaller than or equal to the tolerable pressure difference of the two-way valve) greater than the pressure at the first port 1061, taking the pressure at the first port 1061 of the first relay valve is 90kpa as an example, the pressure at the third port 1063 of the first relay valve is 95kPa, and the pressure at the second port 2042 of the second two-way valve is 95kPa; and since the pre-control pressure of the brake cylinder at the first port 2041 of the second two-way valve is close to the brake cylinder equalizing pipe pressure at the second port 2042, air connection between the first port 2041 and the second port 2042 is caused, then the pressure at the first port 2041 of the second two-way valve is 95kPa, the pressure at the second port 1042 of the first two-way valve is 95kPa, and the pressure at the third port 1043 of the first two-way valve is 95kPa, that is, the pressure at the first port 1061 of the first relay valve is 95kPa; compared with the original 90kPa, it is increased by 5kPa. By such circulation, the brake cylinder equalizing pipe pressure will finally increase to the pressure of the main reservoir, thereby affecting the operation of the locomotive.

Therefore, in present technical solution, the pressure at the output port (i.e., the third port 1063) of the first relay valve is preferably not greater than the pressure at the first port 1061 all the time, so that the normal operation of the locomotive is prevented from being affected.

### (4) Redundancy Description:

Due to the above-mentioned arrangement, redundancy switching between the brake cylinder equalizing pipe control system and the brake cylinder control system can be performed. Specifically, the first control unit and the second control unit are capable of simultaneously outputting corresponding pressures in response to the operation of the driver operating the automatic brake handle and the independent brake handle, and the target values of both are consistent.

The first two-way valve 104 outputs a higher pressure among the pre-control pressure of the brake cylinder equalizing pipe and the pre-control pressure of the brake cylinder to the first port 1061 of the first relay valve 106, and outputs the brake cylinder equalizing pipe pressure after the pressure of the first port 1061 is subjected to flow amplification through the output port (i.e., the third port 1063) of the first relay valve.

The second two-way valve 204 outputs a higher pressure among the pre-control pressure of the brake cylinder and the brake cylinder equalizing pipe pressure to the first port 2061 of the second relay valve 206, and outputs the brake cylinder pressure after the pressure of the first port 2061 is subjected to flow amplification through an output port (i.e., the third port 2063) of the second relay valve.

The first port and the second port are open when the pre-control air-discharging magnet valve 102, 202 is de-energized, and the first port and the second port are closed when the pre-control air-charging magnet valve 101, 201 is de-energized; therefore, the pre-control pressure of the brake cylinder equalizing pipe and the pre-control pressure of the brake cylinder can be gradually reduced to zero when both being de-energized;
when the pre-control pressure of the brake cylinder equalizing pipe is invalid, the first magnet valve 101 and the second magnet valve 102 are de-energized, the pre-control pressure of the brake cylinder equalizing pipe is gradually reduced to zero, and the first two-way valve 104 outputs the pre-control pressure of the brake cylinder with higher output to the first relay valve 106, and then outputs the brake cylinder equalizing pipe pressure; and
when the pre-control pressure of the brake cylinder is invalid, the third magnet valve 201 and the fourth magnet valve 202 are de-energized, the pre-control pressure of the brake cylinder is gradually reduced to zero, and the second two-way valve 204 outputs the brake cylinder equalizing pipe pressure with higher output to the second relay valve 206, and then outputs the brake cylinder pressure.

In summary, the mutually redundancy of the brake cylinder control system and the brake cylinder equalizing pipe control system can be realized in the present invention.

## Claims

1. A locomotive braking control system, comprising a brake cylinder equalizing pipe control system and a brake cylinder control system, wherein,
the brake cylinder equalizing pipe control system includes:
a first main reservoir;
a first magnet valve and a first flow amplification valve both connected with the first main reservoir;
a second magnet valve connected with the first magnet valve;
a first pressure selection device connected with the second magnet valve, and a first pressure detection device located between the second magnet valve and the first pressure selection device;
wherein, the first pressure selection device is connected with the first flow amplification valve; and
the brake cylinder equalizing pipe control system further includes a first control unit electrically connected with the first magnet valve, the second magnet valve and the first pressure detection device;
the brake cylinder control system includes:
a second main reservoir;
a third magnet valve and a second flow amplification valve both connected with the second main reservoir;
a fourth magnet valve connected with the third magnet valve;
a second pressure selection device connected with the fourth magnet valve, and a second pressure detection device located between the fourth magnet valve and the second pressure selection device;
wherein, the second pressure selection device is connected with the second flow amplification valve;
the second flow amplification valve is connected with a brake cylinder pipe so as to realize brake; and
the brake cylinder control system further includes a second control unit electrically connected with the third magnet valve, the fourth magnet valve and the second pressure detection device;
between the brake cylinder equalizing pipe control system and the brake cylinder control system:
the first pressure selection device is connected to a pipeline located between the fourth magnet valve and the second pressure selection device; and
the first flow amplification valve is connected to the second pressure selection device;
further,
the first pressure detection device is configured to acquire a pre-control pressure of the brake cylinder equalizing pipe control system in real time and transmit the acquired pre-control pressure to the first control unit, thus obtain a pre-control pressure actual value of the brake cylinder equalizing pipe;
the first control unit is configured to, when the locomotive braking control system is in a lead cut in mode, receive instruction information output by a brake handle operated by a driver and calculate a pre-control pressure target value of the brake cylinder equalizing pipe according to the instruction information;
the first control unit is further configured to compare the target value with the actual value acquired by the first pressure detection device, and control the first magnet valve and/or the second magnet valve according to a difference of the target value and the actual value so that the actual value is equal to the target value, thus obtain the pre-control pressure of the brake cylinder equalizing pipe; and transmit the pre-control pressure of the brake cylinder equalizing pipe to the first pressure selection device;
the first magnet valve is a pre-control air-charging magnet valve, and is configured to open or close an air-charging passage from the first main reservoir to a pre-control volume of the brake cylinder equalizing pipe control system according to the difference of the pre-control pressure target value of the brake cylinder equalizing pipe and the pre-control pressure actual value of the brake cylinder equalizing pipe;
the second magnet valve is a pre-control air-discharging magnet valve, and is configured to open or close an air-discharging passage from the pre-control volume of the brake cylinder equalizing pipe control system to the atmosphere according to the difference of the pre-control pressure target value of the brake cylinder equalizing pipe and the pre-control pressure actual value of the brake cylinder equalizing pipe;
the first pressure selection device is configured to compare the pre-control pressure of the brake cylinder equalizing pipe with a pre-control pressure of the brake cylinder, and output a higher pressure, referred to as a first pressure, among the pre-control pressure of the brake cylinder equalizing pipe and the pre-control pressure of the brake cylinder to the first flow amplification valve; and the pre-control pressure of the brake cylinder is from the brake cylinder control system;
the first flow amplification valve is configured to amplify the first pressure with low-flow to a brake cylinder equalizing pipe pressure with high-flow;
the second pressure detection device is configured to acquire a pre-control pressure of the brake cylinder control system in real time and transmit the acquired pre-control pressure to the second control unit, thus obtain a pre-control pressure actual value of the brake cylinder;
the second control unit is configured to, when the locomotive braking control system is in the lead cut in mode, receive the instruction information output by the brake handle operated by the driver and calculate a pre-control pressure target value of the brake cylinder according to the instruction information, wherein the pre-control pressure target value of the brake cylinder and the pre-control pressure target value of the brake cylinder equalizing pipe are equal;
the second control unit is further configured to compare the target value with the actual value acquired by the second pressure detection device, and control the third magnet valve and/or the fourth magnet valve according to a difference of the target value and the actual value so that the actual value is equal to the target value, thus obtain the pre-control pressure of the brake cylinder; and transmit the pre-control pressure of the brake cylinder to the second pressure selection device and the first pressure selection device;
the third magnet valve is a pre-control air-charging magnet valve, and is configured to open or close an air-charging passage from the second main reservoir to a pre-control volume of the brake cylinder control system according to the difference of the pre-control pressure target value of the brake cylinder and the pre-control pressure actual value of the of the brake cylinder;
the fourth magnet valve is a pre-control air-discharging magnet valve, and is configured to open or close an air-discharging passage from the pre-control volume of the brake cylinder control system to the atmosphere according to the difference of the pre-control pressure target value of the brake cylinder and the pre-control pressure actual value of the brake cylinder;
the second pressure selection device is configured to compare the brake cylinder equalizing pipe pressure with the pre-control pressure of the brake cylinder, and output a higher pressure, referred to as a second pressure, among the brake cylinder equalizing pipe pressure and the pre-control pressure of the brake cylinder to the second flow amplification valve; and the brake cylinder equalizing pipe pressure is from the brake cylinder equalizing pipe control system;
the second flow amplification valve is configured to amplify the second pressure with low-flow to a brake cylinder pressure with high-flow, and transmit the brake cylinder pressure to the brake cylinder pipe, to realize brake.

2. The control system according to claim 1, wherein, the first control unit and the second control unit receive the first target value from the integrated control unit; and the integrated control unit is configured to, when the locomotive braking control system is in the lead cut in mode, receive the instruction information output by the brake handle operated by the driver and calculate a first target value according to the instruction information, wherein the first target value, the pre-control pressure target value of the brake cylinder equalizing pipe and the pre-control pressure target value of the brake cylinder are equal, and are collectively referred to as a target value.

3. The control system according to claim 1 or 2, wherein, the pressure detection devices select pressure sensors; the pressure selection devices select two-way valves, or two-position three-way magnet valves; the flow amplification valves select relay valves; and the first main reservoir and the second main reservoir are the same main reservoir or different main reservoirs.

4. The control system according to claim 1 or 2, wherein, the second magnet valve is further connected with a first pre-control reservoir to increase the pre-control volume of the brake cylinder equalizing pipe control system; and the fourth magnet valve is further connected with a second pre-control reservoir to increase the pre-control volume of the brake cylinder control system.

5. The control system according to claim 1 or 2, wherein, the first control unit is further electrically connected with a cut-off valve; and the cut-off valve is located in the brake cylinder equalizing pipe control system and located behind the first flow amplification valve, for opening or closing a brake cylinder equalizing pipe pressure output pipeline of the brake cylinder equalizing pipe control system.

6. The control system according to claim 1 or 2, wherein, the second control unit is further electrically connected with a fifth magnet valve which is a distribution valve switching magnet valve, for switching and selecting a source of the pre-control pressure of the brake cylinder.

7. The control system according to claim 6, wherein, the second control unit is further electrically connected with a sixth magnet valve which is a bail-off magnet valve; on one hand, the sixth magnet valve is connected with the fifth magnet valve, on the other hand, the sixth magnet valve is connected with the second pressure selection device, and the sixth magnet valve is further connected to the atmosphere.

8. The control system according to any one of claims 1, 2 and 7, wherein, a third pipeline from the first flow amplification valve to the second pressure selection device is provided with a third pressure detection device, for acquiring a brake cylinder equalizing pipe pressure value; and a fourth pipeline from the second flow amplification valve to the brake cylinder pipe is provided with a fourth pressure detection device, for acquiring a brake cylinder pressure value.

9. The control system according to any one of claims 1, 2 and 7, wherein, a pressure at an outlet of the first flow amplification valve is not greater than the first pressure from the first pressure selection device.

10. A locomotive braking control method, adopting the control system in any of claims 1-9, including the following steps:
acquiring, by the first pressure detection device, a pre-control pressure of the brake cylinder equalizing pipe control system in real time, and transmitting the acquired pre-control pressure to the first control unit, thus obtaining a pre-control pressure actual value of the brake cylinder equalizing pipe;
when the locomotive braking control system is in a lead cut in mode, receiving, by the first control unit, instruction information output by a brake handle operated by a driver, and calculating a pre-control pressure target value of the brake cylinder equalizing pipe according to the instruction information;
comparing, by the first control unit, the target value with the actual value, and controlling the first magnet valve and/or the second magnet valve according to a difference of the target value and the actual value so that the actual value is equal to the target value, thus obtaining the pre-control pressure of the brake cylinder equalizing pipe; and transmitting the pre-control pressure of the brake cylinder equalizing pipe to the first pressure selection device;
acquiring, by the second pressure detection device, a pre-control pressure of the brake cylinder control system in real time, and transmitting the acquired pre-control pressure to the second control unit, thus obtaining a pre-control pressure actual value of the brake cylinder;
when the locomotive braking control system is in the lead cut in mode, receiving, by the second control unit, instruction information output by the brake handle operated by the driver, and calculating a pre-control pressure target value of the brake cylinder according to the instruction information, wherein the pre-control pressure target value of the brake cylinder and the pre-control pressure target value of the brake cylinder equalizing pipe are equal;
comparing, by the second control unit, the target value with the actual value, and controlling the third magnet valve and/or the fourth magnet valve according to a difference of the target value and the actual value so that the actual value is equal to the target value, thus obtaining the pre-control pressure of the brake cylinder; and transmitting the pre-control pressure of the brake cylinder to the second pressure selection device and the first pressure selection device;
comparing, by the first pressure selection device, the pre-control pressure of the brake cylinder equalizing pipe with the pre-control pressure of the brake cylinder, and outputting a higher pressure, referred to as a first pressure, among the pre-control pressure of the brake cylinder equalizing pipe and the pre-control pressure of the brake cylinder to the first flow amplification valve;
amplifying, by the first flow amplification valve, the first pressure with low-flow to a brake cylinder equalizing pipe pressure with high-flow, and outputting the brake cylinder equalizing pipe pressure to the second pressure selection device;
comparing, by the second pressure selection device, the brake cylinder equalizing pipe pressure with the pre-control pressure of the brake cylinder, and outputting a higher pressure, referred to as a second pressure, among the brake cylinder equalizing pipe pressure and the pre-control pressure of the brake cylinder to the second flow amplification valve; and
amplifying, by the second flow amplification valve, the second pressure with low-flow to a brake cylinder pressure with high-flow, and transmitting the brake cylinder pressure to the brake cylinder pipe so as to realize brake.

11. The control method according to claim 10, wherein,
when the pre-control pressure of the brake cylinder equalizing pipe is invalid, the first magnet valve and the second magnet valve are de-energized, the pre-control pressure of the brake cylinder equalizing pipe is gradually reduced to zero, and the first pressure selection device selects the higher pre-control pressure of the brake cylinder as the first pressure to be output to the first flow amplification valve, and then the brake cylinder equalizing pipe pressure is output; or
when the pre-control pressure of the brake cylinder is invalid, the third magnet valve and the fourth magnet valve are de-energized, the pre-control pressure of the brake cylinder is gradually reduced to zero, and the second pressure selection device selects the higher brake cylinder equalizing pipe pressure as the second pressure to be output to the second flow amplification valve, and then the brake cylinder pressure is output.

12. The control method according to claim 10, wherein,
the first control unit acquires the pre-control pressure of the brake cylinder equalizing pipe in real time by the first pressure detection device, to obtain the pre-control pressure actual value of the brake cylinder equalizing pipe; when the locomotive braking control system is in the lead cut in mode, the first control unit compares the actual value with the target value, and controls the first magnet valve and the second magnet valve according to a comparison result; if the actual value cannot be consistent with the target value within a preset time range, the first control unit determines that failure occurs on the first magnet valve or on the second magnet valve or on the first pressure detection device, thus the three elements are de-energized, and the pre-control pressure of the brake cylinder equalizing pipe is discharged into the atmosphere by the second magnet valve; and the pre-control pressure of the brake cylinder from the brake cylinder control system is selected by the first pressure selection device as a higher output, and is output to the first flow amplification valve, and then the brake cylinder equalizing pipe pressure is output; or,
the second control unit acquires the pre-control pressure of the brake cylinder in real time by the second pressure detection device, to obtain the pre-control pressure actual value of the brake cylinder; when the locomotive braking control system is in the lead cut in mode, the second control unit compares the actual value with the target value, and controls the third magnet valve and the fourth magnet valve according to a comparison result; if the actual value cannot be consistent with the target value within a preset time range, the second control unit determines that failure occurs on the third magnet valve or on the fourth magnet valve or on the second pressure detection device, thus the three elements are de-energized, and the pre-control pressure of the brake cylinder is discharged into the atmosphere by the fourth magnet valve; and the brake cylinder equalizing pipe pressure from the brake cylinder equalizing pipe control system is selected by the second pressure selection device as a higher output and is output to the second flow amplification valve, and then the brake cylinder pressure is output.

## Patentansprüche

1. Bremssteuerungssystem für eine Lokomotive, umfassend ein Steuerungssystem für ein Bremszylinder-Ausgleichsrohr und ein Bremszylinder-Steuerungssystem, wobei
das Steuerungssystem für ein Bremszylinder-Ausgleichsrohr Folgendes beinhaltet:
einen ersten Hauptbehälter;
ein erstes Magnetventil und ein erstes Durchflussverstärkungsventil, die beide mit dem ersten Hauptbehälter verbunden sind;
ein zweites Magnetventil, das mit dem ersten Magnetventil verbunden ist;
eine erste Druckauswahlvorrichtung, die mit dem zweiten Magnetventil verbunden ist, und eine erste Druckerfassungsvorrichtung, die sich zwischen dem zweiten Magnetventil und der ersten Druckauswahlvorrichtung befindet;
wobei die erste Druckauswahlvorrichtung mit dem ersten Durchflussverstärkungsventil verbunden ist; und
das Steuerungssystem für ein Bremszylinder-Ausgleichsrohr ferner eine erste Steuerungseinheit beinhaltet, die mit dem ersten Magnetventil, dem zweiten Magnetventil und der ersten Druckerfassungsvorrichtung elektrisch verbunden ist;
das Bremszylinder-Steuerungssystem Folgendes beinhaltet:
einen zweiten Hauptbehälter;
ein drittes Magnetventil und ein zweites Durchflussverstärkungsventil, die beide mit dem zweiten Hauptbehälter verbunden sind;
ein viertes Magnetventil, das mit dem dritten Magnetventil verbunden ist;
eine zweite Druckauswahlvorrichtung, die mit dem vierten Magnetventil verbunden ist, und eine zweite Druckerfassungsvorrichtung, die sich zwischen dem vierten Magnetventil und der zweiten Druckauswahlvorrichtung befindet;
wobei die zweite Druckauswahlvorrichtung mit dem zweiten Durchflussverstärkungsventil verbunden ist;
das zweite Durchflussverstärkungsventil mit einem Bremszylinderrohr verbunden ist, um die Bremse zu realisieren; und
das Bremszylinder-Steuerungssystem ferner eine zweite Steuerungseinheit beinhaltet, die mit dem dritten Magnetventil, dem vierten Magnetventil und der zweiten Druckerfassungsvorrichtung elektrisch verbunden ist;
zwischen dem Steuerungssystem für ein Bremszylinder-Ausgleichsrohr und dem Bremszylinder-Steuerungssystem:
die erste Druckauswahlvorrichtung mit einer Rohrleitung verbunden ist, die sich zwischen dem vierten Magnetventil und der zweiten Druckauswahlvorrichtung befindet; und
das erste Durchflussverstärkungsventil mit der zweiten Druckauswahlvorrichtung verbunden ist;
ferner
die erste Druckerfassungsvorrichtung konfiguriert ist, um einen Vorsteuerungsdruck des Steuerungssystems für ein Bremszylinder-Ausgleichsrohr in Echtzeit zu erwerben und den erworbenen Vorsteuerungsdruck an die erste Steuerungseinheit zu übertragen, wodurch ein tatsächlicher Vorsteuerungsdruckwert des Bremszylinder-Ausgleichsrohrs erhalten wird;
die erste Steuerungseinheit konfiguriert ist, um, wenn das Bremssteuerungssystem für eine Lokomotive in einem Lead-Cut-in-Modus ist, Anweisungsinformationen zu empfangen, die von einem Bremshebel ausgegeben werden, der von einem Fahrer betrieben wird, und einen Vorsteuerungsdruck-Zielwert des Bremszylinder-Ausgleichsrohrs gemäß den Anweisungsinformationen zu berechnen;
die erste Steuerungseinheit ferner konfiguriert ist, um den Zielwert mit dem tatsächlichen Wert zu vergleichen, der von der ersten Druckerfassungsvorrichtung erworben wird, und das erste Magnetventil und/oder das zweite Magnetventil gemäß dem Unterschied des Zielwerts und des tatsächlichen Werts zu steuern, sodass der tatsächliche Wert gleich dem Zielwert ist, wodurch der Vorsteuerungsdruck des Bremszylinder-Ausgleichsrohrs erhalten wird; und den Vorsteuerungsdruck des Bremszylinder-Ausgleichsrohrs an die erste Druckauswahlvorrichtung zu übertragen;
das erste Magnetventil ein Vorsteuerungs-Luftlade-Magnetventil ist und konfiguriert ist, um einen Luftladedurchgang von dem ersten Hauptbehälter zu einem Vorsteuerungsvolumen des Steuerungssystems für ein Bremszylinder-Ausgleichsrohr gemäß dem Unterschied des Vorsteuerungsdruck-Zielwerts des Bremszylinder-Ausgleichsrohrs und des tatsächlichen Vorsteuerungsdruckwerts des Bremszylinder-Ausgleichsrohrs zu öffnen oder zu schließen;
das zweite Magnetventil ein Vorsteuerungs-Luftentlade-Magnetventil ist und konfiguriert ist, um einen Luftentladedurchgang von dem Vorsteuerungsvolumen des Steuerungssystems für ein Bremszylinder-Ausgleichsrohr in die Atmosphäre gemäß dem Unterschied des Vorsteuerungsdruck-Zielwerts des Bremszylinder-Ausgleichsrohrs und des tatsächlichen Vorsteuerungsdruckwerts des Bremszylinder-Ausgleichsrohrs zu öffnen oder zu schließen;
die erste Druckauswahlvorrichtung konfiguriert ist, um den Vorsteuerungsdruck des Bremszylinder-Ausgleichsrohrs mit einem Vorsteuerungsdruck des Bremszylinders zu vergleichen und einen höheren Druck auszugeben, der als ein erster Druck bezeichnet wird, aus dem Vorsteuerungsdruck des Bremszylinder-Ausgleichsrohrs und dem Vorsteuerungsdruck des Bremszylinders, an das erste Durchflussverstärkungsventil; und wobei der Vorsteuerungsdruck des Bremszylinders von dem Bremszylinder-Steuerungssystem ist;
das erste Durchflussverstärkungsventil konfiguriert ist, um den ersten Druck mit geringem Durchfluss zu einem Bremszylinder-Ausgleichsrohrdruck mit hohem Durchfluss zu verstärken;
die zweite Druckerfassungsvorrichtung konfiguriert ist, um einen Vorsteuerungsdruck des Bremszylinder-Steuerungssystems in Echtzeit zu erwerben und den erworbenen Vorsteuerungsdruck an die zweiten Steuerungseinheit zu übertragen, wodurch ein tatsächlicher Vorsteuerungsdruckwert des Bremszylinders erhalten wird;
die zweite Steuerungseinheit konfiguriert ist, um, wenn das Bremssteuerungssystem für eine Lokomotive im Lead-Cut-in-Modus ist, die Anweisungsinformationen zu empfangen, die von dem Bremshebel ausgegeben werden, der von dem Fahrer betrieben wird, und einen Vorsteuerungsdruck-Zielwert des Bremszylinders gemäß den Anweisungsinformationen zu berechnen, wobei der Vorsteuerungsdruck-Zielwert des Bremszylinders und der Vorsteuerungsdruck-Zielwert des Bremszylinder-Ausgleichsrohrs gleich sind;
die zweite Steuerungseinheit ferner konfiguriert ist, um den Zielwert mit dem tatsächlichen Wert zu vergleichen, der von der zweiten Druckerfassungsvorrichtung erworben wird, und das dritte Magnetventil und/oder das vierte Magnetventil gemäß einem Unterschied des Zielwerts und des tatsächlichen Werts zu steuern, sodass der tatsächliche Wert gleich dem Zielwert ist, wodurch der Vorsteuerungsdruck des Bremszylinders erhalten wird; und den Vorsteuerungsdruck des Bremszylinders an die zweite Druckauswahlvorrichtung und die erste Druckauswahlvorrichtung zu übertragen;
das dritte Magnetventil ein Vorsteuerungs-Luftlade-Magnetventil ist und konfiguriert ist, um einen Luftladedurchgang von dem zweiten Hauptbehälter zu einem Vorsteuerungsvolumen des Bremszylinder-Steuerungssystems gemäß dem Unterschied des Vorsteuerungsdruck-Zielwerts des Bremszylinders und des tatsächlichen Vorsteuerungsdruckwerts des Bremszylinders zu öffnen oder zu schließen;
das vierte Magnetventil ein Vorsteuerungs-Luftentlade-Magnetventil ist und konfiguriert ist, um einen Luftentladedurchgang von dem Vorsteuerungsvolumen des Bremszylinder-Steuerungssystems in die Atmosphäre gemäß dem Unterschied des Vorsteuerungsdruck-Zielwerts des Bremszylinders und des tatsächlichen Vorsteuerungsdruckwerts des Bremszylinders zu öffnen oder zu schließen;
die zweite Druckauswahlvorrichtung konfiguriert ist, um den Bremszylinder-Ausgleichsrohrdruck mit einem Vorsteuerungsdruck des Bremszylinders zu vergleichen und einen höheren Druck auszugeben, der als ein zweiter Druck bezeichnet wird, aus dem Bremszylinder-Ausgleichsrohrdruck und dem Vorsteuerungsdruck des Bremszylinders, an das zweite Durchflussverstärkungsventil; und wobei der Bremszylinder-Ausgleichsrohrdruck von dem Steuerungssystem für ein Bremszylinder-Ausgleichsrohr ist;
das zweite Durchflussverstärkungsventil konfiguriert ist, um den zweiten Druck mit geringem Durchfluss zu einem Bremszylinderdruck mit hohem Durchfluss zu verstärken und den Bremszylinderdruck an das Bremszylinderrohr zu übertragen, um die Bremse zu realisieren.

2. Steuerungssystem nach Anspruch 1, wobei die erste Steuerungseinheit und die zweite Steuerungseinheit den ersten Zielwert von der integrierten Steuerungseinheit empfangen; und die integrierte Steuerungseinheit konfiguriert ist, um, wenn das Bremssteuerungssystem für eine Lokomotive im Lead-Cut-in-Modus ist, die Anweisungsinformationen zu empfangen, die von dem Bremshebel ausgegeben werden, der von dem Fahrer betrieben wird, und einen ersten Zielwert gemäß den Anweisungsinformationen zu berechnen, wobei der erste Zielwert, der Vorsteuerungsdruck-Zielwert des Bremszylinder-Ausgleichsrohrs und der Vorsteuerungsdruck-Zielwert des Bremszylinders gleich sind und gemeinsam als ein Zielwert bezeichnet werden.

3. Steuerungssystem nach Anspruch 1 oder 2, wobei die Druckerfassungsvorrichtungen Drucksensoren auswählen; die Druckauswahlvorrichtungen Zweiwegeventile oder Zweipositions-Dreiwege-Magnetventile auswählen, die Durchflussverstärkungsventile Relaisventile auswählen; und der erste Hauptbehälter und der zweite Hauptbehälter der gleiche Hauptbehälter oder unterschiedliche Hauptbehälter sind.

4. Steuerungssystem nach Anspruch 1 oder 2, wobei das zweite Magnetventil ferner mit einem ersten Vorsteuerungsbehälter verbunden ist, um das Vorsteuerungsvolumen des Steuerungssystems für ein Bremszylinder-Ausgleichsrohrs zu erhöhen; und das vierte Magnetventil ferner mit einem zweiten Vorsteuerungsbehälter verbunden ist, um das Vorsteuerungsvolumen des Bremszylinder-Steuerungssystems zu erhöhen.

5. Steuerungssystem nach Anspruch 1 oder 2, wobei die erste Steuerungseinheit ferner mit einem Absperrventil elektrisch verbunden ist; und das Absperrventil sich im Steuerungssystem für ein Bremszylinder-Ausgleichsrohr befindet und sich hinter dem ersten Durchflussverstärkungsventil befindet, zum Öffnen oder Schließen einer Bremszylinder-Ausgleichsrohr-Druckausgaberohrleitung des Steuerungssystems für ein Bremszylinder-Ausgleichsrohr.

6. Steuerungssystem nach Anspruch 1 oder 2, wobei die zweite Steuerungseinheit ferner mit einem fünften Magnetventil elektrisch verbunden ist, das ein Verteilerventil-Schaltmagnetventil ist, zum Umschalten und Auswählen einer Quelle des Vorsteuerungsdrucks des Bremszylinders.

7. Steuerungssystem nach Anspruch 6, wobei die zweite Steuerungseinheit ferner mit einem sechsten Magnetventil elektrisch verbunden ist, das ein Bail-off-Magnetventil ist; auf der einen Seite das sechste Magnetventil mit dem fünften Magnetventil verbunden ist, auf der anderen Seite das sechste Magnetventil mit der zweiten Druckauswahlvorrichtung verbunden ist und das sechste Magnetventil ferner mit der Atmosphäre verbunden ist.

8. Steuerungssystem nach einem der Ansprüche 1, 2 und 7, wobei eine dritte Rohrleitung von dem ersten Durchflussverstärkungsventil zu der zweiten Druckauswahlvorrichtung mit einer dritten Druckerfassungsvorrichtung bereitgestellt ist, zum Erwerben eines Bremszylinder-Ausgleichsrohr-Druckwerts; und eine vierte Rohrleitung von dem zweiten Durchflussverstärkungsventil zu dem Bremszylinderrohr mit einer vierten Druckerfassungsvorrichtung bereitgestellt ist, zum Erwerben eines Bremszylinder-Druckwerts.

9. Steuerungssystem nach einem der Ansprüche 1, 2 und 7, wobei ein Druck an einem Auslass des ersten Durchflussverstärkungsventils nicht größer als der erste Druck von der ersten Druckauswahlvorrichtung ist.

10. Bremssteuerungsverfahren für eine Lokomotive, das das Steuerungssystem in einem der Ansprüche 1-9 übernimmt, einschließlich der folgenden Schritte:
Erwerben, durch die erste Druckerfassungsvorrichtung eines Vorsteuerungsdrucks des Steuerungssystems für ein Bremszylinder-Ausgleichsrohr in Echtzeit, und Übertragen des erworbenen Vorsteuerungsdrucks an die erste Steuerungseinheit, wodurch ein tatsächlicher Vorsteuerungsdruckwert des Bremszylinder-Ausgleichsrohrs erhalten wird;
wenn das Bremssteuerungssystem für eine Lokomotive in einem Lead-Cut-in-Modus ist, Empfangen, von der ersten Steuerungseinheit, von Anweisungsinformationen, die von einem Bremshebel ausgegeben werden, der von einem Fahrer betrieben wird, und Berechnen eines Vorsteuerungsdruck-Zielwerts des Bremszylinder-Ausgleichsrohrs gemäß den Anweisungsinformationen;
Vergleichen, durch die erste Steuerungseinheit, des Zielwerts mit dem tatsächlichen Wert, und Steuern des ersten Magnetventils und/oder das zweite Magnetventils gemäß einem Unterschied des Zielwerts und des tatsächlichen Werts, sodass der tatsächliche Wert gleich dem Zielwert ist, wodurch der Vorsteuerungsdruck des Bremszylinder-Ausgleichsrohrs erhalten wird; und Übertragen des Vorsteuerungsdrucks des Bremszylinder-Ausgleichsrohrs an die erste Druckauswahlvorrichtung;
Erwerben, durch die zweite Druckerfassungsvorrichtung, eines Vorsteuerungsdrucks des Bremszylinder-Steuerungssystems in Echtzeit, und Übertragen des Erworbenen Vorsteuerungsdrucks an die zweite Steuerungseinheit, wodurch ein tatsächlicher Vorsteuerungsdruckwert des Bremszylinders erhalten wird;
wenn das Bremssteuerungssystem für eine Lokomotive im Lead-Cut-in-Modus ist, Empfangen, durch die zweite Steuerungseinheit, von Anweisungsinformationen, die von dem Bremshebel ausgegeben werden, der von dem Fahrer betrieben wird, und Berechnen eines Vorsteuerungsdruck-Zielwerts des Bremszylinders gemäß den Anweisungsinformationen, wobei der Vorsteuerungsdruck-Zielwert des Bremszylinders und der Vorsteuerungsdruck-Zielwert des Bremszylinder-Ausgleichsrohrs gleich sind;
Vergleichen, durch die zweite Steuerungseinheit, des Zielwerts mit dem tatsächlichen Wert, und Steuern des dritten Magnetventils und/oder des vierten Magnetventils gemäß einem Unterschied des Zielwerts und des tatsächlichen Werts, sodass der tatsächliche Wert gleich dem Zielwert ist, wodurch der Vorsteuerungsdruck des Bremszylinders erhalten wird; und Übertragen des Vorsteuerungsdrucks des Bremszylinders an die zweite Druckauswahlvorrichtung und die erste Druckauswahlvorrichtung;
Vergleichen, durch die erste Druckauswahlvorrichtung, des Vorsteuerungsdrucks des Bremszylinder-Ausgleichsrohrs mit dem Vorsteuerungsdruck des Bremszylinders, und Ausgeben eines höheren Drucks, der als ein erster Druck bezeichnet wird, aus dem Vorsteuerungsdruck des Bremszylinder-Ausgleichsrohrs und dem Vorsteuerungsdruck des Bremszylinders, an das erste Durchflussverstärkungsventil;
Verstärken, durch das erste Durchflussverstärkungsventil, des ersten Drucks mit geringem Durchfluss zu einem Bremszylinder-Ausgleichsrohrdruck mit hohem Durchfluss, und Ausgeben des Bremszylinder-Ausgleichsrohrdrucks an die zweite Druckauswahlvorrichtung;
Vergleichen, durch die zweite Druckauswahlvorrichtung, des Bremszylinder-Ausgleichsrohrdrucks mit dem Vorsteuerungsdruck des Bremszylinders, und Ausgeben eines höheren Drucks, der als ein zweiter Druck bezeichnet wird, aus dem Bremszylinder-Ausgleichsrohrdruck und dem Vorsteuerungsdruck des Bremszylinders, an das zweite Durchflussverstärkungsventil; und
Verstärken, durch das zweite Durchflussverstärkungsventil, des zweiten Drucks mit geringem Durchfluss zu einem Bremszylinderdruck mit hohem Durchfluss, und Übertragen des Bremszylinderdrucks an das Bremszylinderrohr, um die Bremse zu realisieren.

11. Steuerungsverfahren nach Anspruch 10, wobei,
wenn der Vorsteuerungsdruck des Bremszylinder-Ausgleichsrohrs unwirksam ist, werden das erste Magnetventil und das zweite Magnetventil abgetrennt, der Vorsteuerungsdruck des Bremszylinder-Ausgleichsrohrs wird allmählich auf null verringert und die erste Druckauswahlvorrichtung wählt den höheren Vorsteuerungsdruck des Bremszylinders als den ersten Druck aus, der an das erste Durchflussverstärkungsventil ausgegeben werden soll, und dann wird der Bremszylinder-Ausgleichsrohrdruck ausgegeben; oder
wenn der Vorsteuerungsdruck des Bremszylinders unwirksam ist, werden das dritte Magnetventil und das vierte Magnetventil abgetrennt, der Vorsteuerungsdruck des Bremszylinders wird allmählich auf null verringert und die zweite Druckauswahlvorrichtung wählt den höheren Bremszylinder-Ausgleichsrohrdruck als den zweiten Druck aus, der an das zweite Durchflussverstärkungsventil ausgegeben werden soll, und dann wird der Bremszylinderdruck ausgegeben.

12. Steuerungsverfahren nach Anspruch 10, wobei
die erste Steuerungseinheit den Vorsteuerungsdruck des Bremszylinder-Ausgleichsrohrs in Echtzeit durch die erste Druckerfassungsvorrichtung erwirbt, um den tatsächlichen Vorsteuerungsdruckwert des Bremszylinder-Ausgleichsrohrs zu erhalten; wenn das Bremssteuerungssystem für eine Lokomotive im Lead-Cut-in-Modus ist, die erste Steuerungseinheit den tatsächlichen Wert mit dem Zielwert vergleicht und das erste Magnetventil und das zweite Magnetventil gemäß einem Vergleichsergebnis steuert; wenn der tatsächliche Wert nicht konsistent mit dem Zielwert in einem voreingestellten Zeitbereich sein kann, die erste Steuerungseinheit bestimmt, dass ein Fehler an dem ersten Magnetventil oder an dem zweiten Magnetventil oder an der ersten Druckerfassungsvorrichtung auftritt, daher werden die drei Elemente abgetrennt und der Vorsteuerungsdruck des Bremszylinder-Ausgleichsrohrs wird durch das zweite Magnetventil in die Atmosphäre abgegeben; und der Vorsteuerungsdruck des Bremszylinders von dem Bremszylinder-Steuerungssystem wird ausgewählt durch die erste Druckauswahlvorrichtung als eine höhere Leistung und wird an das erste Durchflussverstärkungsventil ausgegeben, und dann wird der Bremszylinder-Ausgleichsrohrdruck ausgegeben; oder
die zweite Steuerungseinheit den Vorsteuerungsdruck des Bremszylinders in Echtzeit durch die zweite Druckerfassungsvorrichtung erwirbt, um den tatsächlichen Vorsteuerungsdruckwert des Bremszylinders zu erhalten; wenn das Bremssteuerungssystem für eine Lokomotive im Lead-Cut-in-Modus ist, die zweite Steuerungseinheit den tatsächlichen Wert mit dem Zielwert vergleicht und das dritte Magnetventil und das vierte Magnetventil gemäß einem Vergleichsergebnis steuert; wenn der tatsächliche Wert nicht konsistent mit dem Zielwert in einem voreingestellten Zeitbereich sein kann, die zweite Steuerungseinheit bestimmt, dass ein Fehler an dem dritten Magnetventil oder an dem vierten Magnetventil oder an der zweiten Druckerfassungsvorrichtung auftritt, daher werden die drei Elemente abgetrennt und der Vorsteuerungsdruck des Bremszylinders wird durch das vierte Magnetventil in die Atmosphäre abgegeben; und der Bremszylinder-Ausgleichsrohrdruck von dem Steuerungssystem für ein Bremszylinder-Ausgleichsrohr wird ausgewählt durch die zweite Druckauswahlvorrichtung als eine höhere Leistung und wird an das zweite Durchflussverstärkungsventil ausgegeben, und dann wird der Bremszylinderdruck ausgegeben.

## Revendications

1. Système de commande de freinage d'une locomotive, comprenant un système de commande de conduite d'égalisation de cylindre de frein et un système de commande de cylindre de frein, dans lequel,
le système de commande de conduite d'égalisation de cylindre de frein comprend :
un premier réservoir principal ;
une première vanne magnétique et une première vanne d'amplification de débit toutes deux connectées au premier réservoir principal ;
une deuxième vanne magnétique connectée à la première vanne magnétique ;
un premier dispositif de sélection de pression connecté à la deuxième vanne magnétique, et un premier dispositif de détection de pression situé entre la deuxième vanne magnétique et le premier dispositif de sélection de pression ;
dans lequel, le premier dispositif de sélection de pression est connecté à la première vanne d'amplification de débit ; et
le système de commande de conduite d'égalisation de cylindre de frein comprend en outre une première unité de commande connectée électriquement à la première vanne magnétique, à la deuxième vanne magnétique et au premier dispositif de détection de pression ;
le système de commande de cylindre de frein comprend :
un deuxième réservoir principal ;
une troisième vanne magnétique et une deuxième vanne d'amplification de débit, toutes deux connectées au deuxième réservoir principal ;
une quatrième vanne magnétique connectée à la troisième vanne magnétique ;
un deuxième dispositif de sélection de pression connecté à la quatrième vanne magnétique, et un deuxième dispositif de détection de pression situé entre la quatrième vanne magnétique et le deuxième dispositif de sélection de pression ;
dans lequel, le deuxième dispositif de sélection de pression est connecté à la deuxième vanne d'amplification de débit ;
la deuxième vanne d'amplification de débit est connectée à une conduite de cylindre de frein de manière à réaliser le freinage ; et
le système de commande de cylindre de frein comprend en outre une deuxième unité de commande connectée électriquement à la troisième vanne magnétique, à la quatrième vanne magnétique et au deuxième dispositif de détection de pression ;
entre le système de commande de conduite d'égalisation de cylindre de frein et le système de commande de cylindre de frein :
le premier dispositif de sélection de pression est connecté à une conduite située entre la quatrième vanne magnétique et le deuxième dispositif de sélection de pression ; et
la première vanne d'amplification de débit est connectée au deuxième dispositif de sélection de pression ;
en outre,
le premier dispositif de détection de pression est configuré pour acquérir une pression de précommande du système de commande de conduite d'égalisation de cylindre de frein en temps réel et transmettre la pression de précommande acquise à la première unité de commande, obtenant ainsi une valeur réelle de pression de précommande de la conduite d'égalisation de cylindre de frein ;
la première unité de commande est configurée pour, lorsque le système de commande de freinage de locomotive est dans un mode de coupure d'avance, recevoir des informations d'instruction émises par une poignée de frein actionnée par un conducteur et calculer une valeur cible de pression de précommande de la conduite d'égalisation de cylindre de frein selon les informations d'instruction ;
la première unité de commande est en outre configurée pour comparer la valeur cible avec la valeur réelle acquise par le premier dispositif de détection de pression, et commander la première vanne magnétique et/ou la deuxième vanne magnétique en fonction d'une différence entre la valeur cible et la valeur réelle de sorte que la valeur réelle est égale à la valeur cible, obtenant ainsi la pression de précommande de la conduite d'égalisation de cylindre de frein ; et transmettre la pression de précommande de la conduite d'égalisation de cylindre de frein au premier dispositif de sélection de pression ;
la première vanne magnétique est une vanne magnétique de charge d'air de précommande, et est configurée pour ouvrir ou fermer un passage de charge d'air depuis le premier réservoir principal vers un volume de précommande du système de commande de la conduite d'égalisation de cylindre de frein selon la différence entre la valeur cible de la pression de précommande de la conduite d'égalisation de cylindre de frein et la valeur réelle de la pression de précommande de la conduite d'égalisation de cylindre de frein ;
la deuxième vanne magnétique est une vanne magnétique de précommande de décharge d'air, et est configurée pour ouvrir ou fermer un passage de décharge d'air depuis le volume de précommande du système de commande de conduite d'égalisation de cylindre de frein à l'atmosphère en fonction de la différence de la valeur cible de la pression de précommande de la conduite d'égalisation de cylindre de frein et la valeur réelle de la pression de précommande de la conduite d'égalisation de cylindre de frein ;
le premier dispositif de sélection de pression est configuré pour comparer la pression de précommande de la conduite d'égalisation de cylindre de frein à une pression de précommande du cylindre de frein, et sortir une pression plus élevée, dénommée première pression, parmi la pression de précommande de la conduite d'égalisation de cylindre de frein et la pression de précommande du cylindre de frein à la première vanne d'amplification de débit ; et la pression de précommande du cylindre de frein provient du système de commande de cylindre de frein ;
la première vanne d'amplification de débit est configurée pour amplifier la première pression à faible débit en une pression de conduite d'égalisation de cylindre de frein à débit élevé ;
le deuxième dispositif de détection de pression est configuré pour acquérir une pression de précommande du système de commande de cylindre de frein en temps réel et transmettre la pression de précommande acquise à la deuxième unité de commande, obtenant ainsi une valeur réelle de pression de précommande du cylindre de frein ;
la deuxième unité de commande est configurée pour, lorsque le système de commande de freinage de la locomotive est en mode de coupure d'avance, recevoir les informations d'instruction émises par la poignée de frein actionnée par le conducteur et calculer une valeur cible de pression de précommande du cylindre de frein selon les informations d'instruction, dans lequel la valeur cible de pression de précommande du cylindre de frein et la valeur cible de pression de précommande de la conduite d'égalisation de cylindre de frein sont égales ;
la deuxième unité de commande est en outre configurée pour comparer la valeur cible avec la valeur réelle acquise par le deuxième dispositif de détection de pression, et commander la troisième vanne magnétique et/ou la quatrième vanne magnétique en fonction d'une différence entre la valeur cible et la valeur réelle de sorte que la valeur réelle soit égale à la valeur cible, obtenant ainsi la pression de précommande du cylindre de frein ; et transmettre la pression de précommande du cylindre de frein au deuxième dispositif de sélection de pression et au premier dispositif de sélection de pression ;
la troisième vanne magnétique est une vanne magnétique de charge d'air de précommande, et est configurée pour ouvrir ou fermer un passage de charge d'air depuis le deuxième réservoir principal à un volume de précommande du système de commande de cylindre de frein selon la différence de la valeur cible de pression de précommande du cylindre de frein et la valeur réelle de pression de précommande du cylindre de frein ;
la quatrième vanne magnétique est une vanne magnétique d'évacuation d'air de précommande, et est configurée pour ouvrir ou fermer un passage d'évacuation d'air depuis le volume de précommande du système de commande de cylindre de frein à l'atmosphère selon la différence entre la valeur cible de pression de précommande du cylindre de frein et la valeur réelle de pression de précommande du cylindre de frein ;
le deuxième dispositif de sélection de pression est configuré pour comparer la pression de la conduite d'égalisation de cylindre de frein à la pression de précommande du cylindre de frein, et sortir une pression plus élevée, dénommée deuxième pression, parmi la pression de la conduite d'égalisation de cylindre de frein et la pression de précommande du cylindre de frein à la deuxième vanne d'amplification de débit ; et la pression de la conduite d'égalisation de cylindre de frein provient du système de commande de conduite d'égalisation de cylindre de frein ;
la deuxième vanne d'amplification de débit est configurée pour amplifier la deuxième pression à faible débit en une pression de cylindre de frein à débit élevé, et transmettre la pression du cylindre de frein à la conduite de cylindre de frein, pour réaliser le freinage.

2. Système de commande selon la revendication 1, dans lequel la première unité de commande et la deuxième unité de commande reçoivent la première valeur cible de l'unité de commande intégrée ; et l'unité de commande intégrée est configurée pour, lorsque le système de commande de freinage de locomotive est en mode de coupure d'avance, recevoir les informations d'instruction émises par la poignée de frein actionnée par le conducteur et calculer une première valeur cible selon les informations d'instruction, dans lequel la première valeur cible, la valeur cible de pression de précommande de la conduite d'égalisation de cylindre de frein et la valeur cible de pression de précommande du cylindre de frein sont égales, et sont collectivement dénommées une valeur cible.

3. Système de commande selon la revendication 1 ou 2, dans lequel, les dispositifs de détection de pression sélectionnent des capteurs de pression ; les dispositifs de sélection de pression sélectionnent des vannes à deux voies, ou des vannes magnétiques à trois voies à deux positions ; les vannes d'amplification de débit sélectionnent des vannes relais ; et le premier réservoir principal et le deuxième réservoir principal sont le même réservoir principal ou des réservoirs principaux différents.

4. Système de commande selon la revendication 1 ou 2, dans lequel, la deuxième vanne magnétique est en outre connectée à un premier réservoir de précommande pour augmenter le volume de précommande du système de commande de conduite d'égalisation de cylindre de frein ; et la quatrième vanne magnétique est en outre connectée à un deuxième réservoir de précommande pour augmenter le volume de précommande du système de commande de cylindre de frein.

5. Système de commande selon la revendication 1 ou 2, dans lequel, la première unité de commande est en outre connectée électriquement à une vanne de coupure ; et la vanne de coupure est située dans le système de commande de conduite d'égalisation de cylindre de frein et située derrière la première vanne d'amplification de débit, pour ouvrir ou fermer une conduite de sortie de pression de conduite d'égalisation de cylindre de frein du système de commande de conduite d'égalisation de cylindre de frein.

6. Système de commande selon la revendication 1 ou 2, dans lequel la deuxième unité de commande est en outre connectée électriquement à une cinquième vanne magnétique qui est une vanne magnétique de commutation de vanne de distribution, pour commuter et sélectionner une source de la pression de précommande du cylindre de frein.

7. Système de commande selon la revendication 6, dans lequel, la deuxième unité de commande est en outre connectée électriquement à une sixième vanne magnétique qui est une vanne magnétique d'évacuation ; d'une part, la sixième vanne magnétique est connectée à la cinquième vanne magnétique, d'autre part, la sixième vanne magnétique est connectée au deuxième dispositif de sélection de pression, et la sixième vanne magnétique est en outre connectée à l'atmosphère.

8. Système de commande selon l'une quelconque des revendications 1, 2 et 7, dans lequel, une troisième conduite allant de la première vanne d'amplification de débit au deuxième dispositif de sélection de pression est munie d'un troisième dispositif de détection de pression, pour acquérir une valeur de pression de conduite d'égalisation de cylindre de frein ; et une quatrième conduite allant de la deuxième vanne d'amplification de débit à la conduite de cylindre de frein est munie d'un quatrième dispositif de détection de pression, pour acquérir une valeur de pression de cylindre de frein.

9. Système de commande selon l'une quelconque des revendications 1, 2 et 7, dans lequel, une pression à une sortie de la première vanne d'amplification de débit n'est pas supérieure à la première pression provenant du premier dispositif de sélection de pression.

10. Procédé de commande de freinage de locomotive, adoptant le système de commande selon l'une quelconque des revendications 1 à 9, comprenant les étapes suivantes consistant à :
acquérir, par le premier dispositif de détection de pression, une pression de précommande du système de commande de conduite d'égalisation de cylindre de frein en temps réel, et transmettre la pression de précommande acquise à la première unité de commande, obtenant ainsi une valeur réelle de pression de précommande de la conduite d'égalisation de cylindre de frein ;
lorsque le système de commande de freinage de locomotive est dans un mode de coupure d'avance, recevoir, par la première unité de commande, des informations d'instruction sorties par une poignée de frein actionnée par un conducteur, et calculer une valeur cible de pression de précommande de la conduite d'égalisation de cylindre de frein selon les informations d'instruction ;
comparer, par la première unité de commande, la valeur cible à la valeur réelle, et commander la première vanne magnétique et/ou la deuxième vanne magnétique en fonction d'une différence entre la valeur cible et la valeur réelle de sorte que la valeur réelle soit égale à la valeur cible, obtenant ainsi la pression de précommande de la conduite d'égalisation de cylindre de frein ; et transmettre la pression de précommande de la conduite d'égalisation de cylindre de frein au premier dispositif de sélection de pression ;
acquérir, par le deuxième dispositif de détection de pression, une pression de précommande du système de commande de cylindre de frein en temps réel, et transmettre la pression de précommande acquise à la deuxième unité de commande, obtenant ainsi une valeur réelle de pression de précommande du cylindre de frein ;
lorsque le système de commande de freinage de locomotive est dans le mode de coupure d'avance, recevoir, par la deuxième unité de commande, des informations d'instruction sorties par la poignée de frein actionnée par le conducteur, et calculer une valeur cible de pression de précommande du cylindre de frein selon les informations d'instruction, dans lequel la valeur cible de pression de précommande du cylindre de frein et la valeur cible de pression de précommande de la conduite d'égalisation de cylindre de frein sont égales ;
comparer, par la deuxième unité de commande, la valeur cible à la valeur réelle, et commander la troisième vanne magnétique et/ou la quatrième vanne magnétique en fonction d'une différence entre la valeur cible et la valeur réelle de sorte que la valeur réelle est égale à la valeur cible, obtenant ainsi la pression de précommande du cylindre de frein ; et transmettre la pression de précommande du cylindre de frein au deuxième dispositif de sélection de pression et au premier dispositif de sélection de pression ;
comparer, par le premier dispositif de sélection de pression, la pression de précommande de la conduite d'égalisation de cylindre de frein avec la pression de précommande du cylindre de frein, et sortir une pression plus élevée, dénommée première pression, parmi la pression de précommande de la conduite d'égalisation de cylindre de frein et la pression de précommande du cylindre de frein à la première vanne d'amplification de débit ;
amplifier, par la première vanne d'amplification de débit, la première pression à faible débit en une pression de conduite d'égalisation de cylindre de frein à débit élevé, et sortir la pression de conduite d'égalisation de cylindre de frein vers le deuxième dispositif de sélection de pression ;
comparer, par le deuxième dispositif de sélection de pression, la pression de la conduite d'égalisation de cylindre de frein avec la pression de précommande du cylindre de frein, et sortir une pression plus élevée, dénommée deuxième pression, parmi la pression de la conduite d'égalisation de cylindre de frein et la pression de précommande du cylindre de frein à la deuxième vanne d'amplification de débit ; et
amplifier, par la deuxième vanne d'amplification de débit, la deuxième pression à faible débit en une pression de cylindre de frein à débit élevé, et transmettre la pression du cylindre de frein à la conduite de cylindre de frein de manière à réaliser le freinage.

11. Procédé de commande selon la revendication 10, dans lequel,
lorsque la pression de précommande de la conduite d'égalisation de cylindre de frein n'est pas valide, la première vanne magnétique et la deuxième vanne magnétique sont mises hors tension, la pression de précommande de la conduite d'égalisation de cylindre de frein est progressivement réduite à zéro, et le premier dispositif de sélection de pression sélectionne la pression de précommande la plus élevée du cylindre de frein comme première pression à sortir à la première vanne d'amplification de débit, ensuite la pression de la conduite d'égalisation de cylindre de frein est sortie ; ou
lorsque la pression de précommande du cylindre de frein n'est pas valide, la troisième vanne magnétique et la quatrième vanne magnétique sont mises hors tension, la pression de précommande du cylindre de frein est progressivement réduite à zéro, et le deuxième dispositif de sélection de pression sélectionne la pression de conduite d'égalisation du cylindre de frein la plus élevée comme deuxième pression à sortir à la deuxième vanne d'amplification de débit, ensuite la pression du cylindre de frein est sortie.

12. Procédé de commande selon la revendication 10, dans lequel,
la première unité de commande acquiert la pression de précommande de la conduite d'égalisation de cylindre de frein en temps réel par le premier dispositif de détection de pression, pour obtenir la valeur réelle de la pression de précommande de la conduite d'égalisation de cylindre de frein ; lorsque le système de commande de freinage de la locomotive est dans le mode de coupure d'avance, la première unité de commande compare la valeur réelle à la valeur cible, et commande la première vanne magnétique et la deuxième vanne magnétique selon un résultat de comparaison ; si la valeur réelle ne peut pas être cohérente avec la valeur cible dans une plage de temps prédéfinie, la première unité de commande détermine qu'une défaillance se produit sur la première vanne magnétique ou sur la deuxième vanne magnétique ou sur le premier dispositif de détection de pression, ainsi les trois éléments sont mis hors tension, et la pression de précommande de la conduite d'égalisation de cylindre de frein est évacuée dans l'atmosphère par la deuxième vanne magnétique ; et la pression de précommande du cylindre de frein provenant du système de commande du cylindre de frein est sélectionnée par le premier dispositif de sélection de pression comme une sortie plus élevée, et est sortie à la première vanne d'amplification de débit, et ensuite la pression de la conduite d'égalisation de cylindre de frein est sortie ; ou,
la deuxième unité de commande acquiert la pression de précommande du cylindre de frein en temps réel par le deuxième dispositif de détection de pression, pour obtenir la valeur réelle de la pression de précommande de cylindre de frein ; lorsque le système de commande de freinage de la locomotive est en mode de coupure d'avance, la deuxième unité de commande compare la valeur réelle avec la valeur cible, et commande la troisième vanne magnétique et la quatrième vanne magnétique en fonction du résultat de la comparaison ; si la valeur réelle ne peut pas être cohérente avec la valeur cible dans une plage de temps prédéfinie, la deuxième unité de commande détermine qu'une défaillance se produit sur la troisième vanne magnétique ou sur la quatrième vanne magnétique ou sur le deuxième dispositif de détection de pression, ainsi les trois éléments sont mis hors tension, et la pression de précommande du cylindre de frein est évacuée dans l'atmosphère par la quatrième vanne magnétique ; et la pression de la conduite d'égalisation de cylindre de frein provenant du système de commande de la conduite d'égalisation de cylindre de frein est sélectionnée par le deuxième dispositif de sélection de pression comme une sortie supérieure et est sortie à la deuxième vanne d'amplification de débit, et ensuite la pression du cylindre de frein est sortie.
